# EUROPEAN PATENT SPECIFICATION

(11) **EP 0 618 532 B1**
(45) Date of publication and mention of the grant of the patent: **26.01.2000**
(21) Application number: 94301563.6
(22) Date of filing: 04.03.1994
(51) Int. Cl.: G06F 9/46

(54) **Deadlock detecting device**
Endlosschleife-Erkennungsgerät
Dispositif de détection d'impasses

(30) Priority: 30.03.1993 JP 9692893
(43) Date of publication of application: 05.10.1994
(73) Proprietor: FUJITSU LIMITED, Kawasaki-shi, Kanagawa 211 (JP)
(72) Inventor: Fujita, Kazuhiko, c/o Fujitsu Limited, Kawasaki-shi, Kanagawa 211 (JP)
(74) Representative: Fenlon, Christine Lesley

(56) References cited:
- US-A- 4 189 771
- US-A- 4 403 285
- US-A- 4 791 554
- COMPUTER, vol.22, no.11, November 1989, LONG BEACH US pages 37 - 48 M. SINGHAL 'Deadlock detection in distributed systems'
- IBM TECHNICAL DISCLOSURE BULLETIN., vol.16, no.10, March 1974, NEW YORK US pages 3471 - 3481 A. CHANDRA ET AL 'Communication protocol for deadlock detection in computer networks'

## Description

This invention relates to a device of detecting deadlock in a multitasking system.

In recent years, multitasking systems have been developed in which a plurality of tasks or transactions are executed at the same time as a mode of operation of an information processing system using computers. A task is one or more sequence of instructions treated as a unit of work to be accomplished by a central processing unit (CPU). A transaction is a set of operations to carry out one complete data operation. The multitasking is a state in which two or more programs (tasks, transactions) are executed simultaneously in parallel on a single computer system or on a plurality of computer systems connected in an interleaved manner allowing exchange of information therebetween.

In the operating systems that support this multitasking, two or more tasks may commonly use one computer resource. In such a case, each task may use exclusively portions of the resources that are necessary for the execution of the other task(s). As a result, the tasks are simultaneously waiting resources assigned to the other(s), each one unable to carry out further processing. Such situation is called deadlock. A term "lock" is commonly used as a technical term representing "use exclusively", so that a word "lock" is used hereinafter also as a verb in place of "use exclusively."

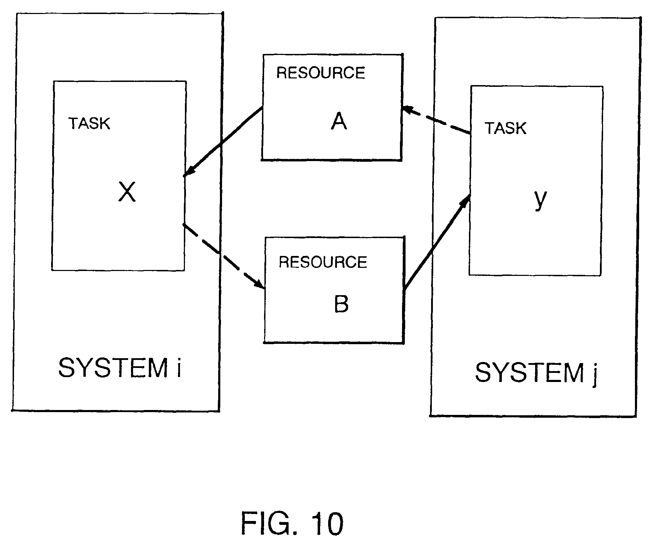

An example of the deadlock situation is shown in Fig. 10. Fig. 10 illustrates an example in a distributed system consisting of two computer systems i and j. One computer system i executes a task x and the other computer j executes a task y. In addition, it is assumed that two resources A and B can be accessed by the individual computer systems i and j. The term "resource", as used herein means software such as programs, files and data that can be allocated to the tasks. The resource used herein can also refer to the contents (pages or records) of a database located somewhere other than the computer systems i and j.

In Fig. 10, the task x has locked the resource A while the task y has locked the resource B. At the same time, the task y has asked for the resource A and is waiting to lock the resource A. Likewise, the task x has asked for the resource B and is awaiting to lock the resource B. In such a case, the task y cannot lock the resource A until the task x has released the lock on the resource A. Likewise, the task x cannot lock the resource B until the task y has released the lock on the resource B. As a result, the tasks x and y are each awaiting the resources locked by the other. When both tasks x and y are suspended (waiting), it is not possible to release the resources A and B that are locked by them. Accordingly, this situation lasts endlessly and each task is thus unable to carry out further processing.

Such deadlock is a problem that could be caused in the multitasking systems regardless of whether the computer system is a multi-processing system or a single processing system and whether the computer system performs a stand-alone processing or serves as a distributed system.

A way for recovering from the deadlock, when it is caused, should be provided. To this end, the deadlocks should be detected.

For example, an article entitled "Deadlock Detection in Distributed Systems", by M. Singhal, Computer, vol. 22, no. 11, November 1989, describes a processing system in which a plurality of tasks use a set of common resources. The described processing system may be considered to comprise: task managing means for managing execution of the tasks so as to permit parallel execution of two or more of the said tasks; lock managing means for managing which resource is locked by which task, and operable, when a first one of the tasks makes a request for a resource which is already locked by a second one of the tasks, to generate a waiting relation indication indicating that the first task is waiting for the second task; registering means for registering such a generated waiting relation indication; and deadlock detecting means operable, based on such waiting relation indications registered in said registering means, to detect a deadlock condition in which, for a group of tasks made up of at least two tasks of the said plurality, each task of the group is awaiting such a resource locked by another one of the tasks of the group and is unable to carry out further processing.

To detect the deadlocks effectively, the following requirements should be satisfied.

First, it is necessary to avoid incorrectly detecting a phantom deadlock as a deadlock, in a situation where there is no deadlock present. (First requirement)

Second, all deadlocks should be detected. In other words, each deadlock, if actually caused, should be detected (Second requirement)

Third, any effects on the system due to detection of the deadlocks should be reduced as much as possible. More specifically, stopping a task in order to detect a deadlock should be avoided, if possible. (Third requirement)

If the multitasking system is achieved on a distributed system, the following requirement should be satisfied along with the above-mentioned requirements. When systems are required to intercommunicate with each other to detect the deadlocks, an overhead time that the systems spend for the communication should be reduced as much as possible. (Fourth requirement)

Conventional deadlock detecting devices are based on detection of the deadlocks with satisfaction of the above-mentioned first through third requirements by means of satisfying the following conditions. The conditions are:
(a) free from asynchronous (unexpected) abortion of one of the two contending transactions;
(b) free from delay and loss of communication messages between the systems when the multitasking system is achieved on the distributed system;
(c) free from modification of a transaction waiting relation during detection of the deadlocks; and
(d) free from an unexpected crash (asynchronous down) of the system when the multitasking system is achieved on the distributed system.

Described below is a relation between the first through third requirements and the conditions (a) through (d).

For the condition (a), the asynchronous abortion of the transactions makes it impossible to avoid detection of the phantom deadlock in the above-mentioned first requirement. Take as an example the case in which the task (transaction) x has locked the resource A while the task (transaction) y has locked the resource B, and in which the task y is asynchronously aborted immediately after the task y asks for the resource A and the task x asks for the resource B. In such a case, the resource B locked by the task y is actually released as a result of the asynchronous aborting of the task y and thus the task x is allowed to lock the resource B. Accordingly, the deadlock is actually avoided. It is, however, impossible to detect immediately this release of the resource B due to the asynchronous abortion of the task y, causing the situation to be considered as a deadlock even though no deadlock is actually caused.

For the condition (b), asynchronous down of the system sometimes allows detection of the deadlock and sometimes not. Accordingly, it is impossible to detect all deadlocks as required in the above-mentioned second requirement. This is because even the occurrence of the deadlock becomes uncertain when transmission of a communication message is delayed or the message is lost due to abnormal communication, since in a distributed system each computer system is allowed to access to a common resource through the intercommunication of the systems.

Likewise, for the condition (d), delay or loss of the communication message between systems sometimes allow detection of the deadlock and sometimes not. Accordingly, it is impossible to detect all deadlocks as required in the above-mentioned second requirement. This is because management information on the tasks in the system is lost and it becomes impossible to determine the deadlock when one system is non-operational (downed) during operation of the other system.

For the condition (c), the first or the second requirement cannot be satisfied when the transaction waiting relation is changed during detection of the deadlocks because information regarding which task locks which resource is lost.

However, to satisfy the condition (c) there must be no new transaction (task) started and no new waiting relation generated during detection of the deadlocks. In other words, acceptance of any request for such an action in the system should be suspended temporarily to detect the deadlocks. Accordingly, if a task issues a request for a resource that has no relation with the deadlock, the request should be suspended. As a result, seeking to satisfy the condition (c) inhibits a smooth and effective operation of the system and the third requirement will then not be satisfied.

It is impossible in practice to avoid detection of the phantom deadlocks when condition (a) is not satisfied. In other words, it is impossible to predict and avoid abnormal states that could be caused in the individual systems and thus the asynchronous abortion of tasks cannot be avoided.

According to a first aspect of the present invention, there is provided a processing system, in which a plurality of tasks use a set of common resources, comprising: task managing means for managing execution of the tasks so as to permit parallel execution of two or more of the said tasks; lock managing means for managing which resource is locked by which task, and operable, when a first one of the tasks makes a request for a resource which is already locked by a second one of the tasks, to generate a waiting relation indication indicating that the first task is waiting for the second task; registering means for registering such a generated waiting relation indication; and deadlock detecting means operable, based on such waiting relation indications registered in said registering means, to detect a deadlock condition in which, for a group of tasks made up of at least two tasks of the said plurality, each task of the group is awaiting such a resource locked by another one of the tasks of the group and is unable to carry out further processing; characterised in that the said deadlock detecting means is operable to perform a deadlock detecting operation, for detecting such a deadlock condition, independently of the task managing means and of the lock managing means, and is also operable, in the event that a waiting relation indication is generated by the processing system during such an operation, to hold back registration of that indication pending completion of the operation.

According to a second aspect of the present invention, there is provided a processing system, for use in distributed multitasking apparatus in which a plurality of such processing systems are distributed and in which a plurality of tasks use a set of common resources, which processing system comprises: task managing means for managing execution of the tasks so as to permit parallel execution of two or more of the said tasks; lock managing means for managing which resource is locked by which task, and operable, when a first one of the tasks makes a request for a resource which is already locked by a second one of the tasks, to generate a waiting relation indication indicating that the first task is waiting for the second task; communication means operable, when the said first task is being performed in the claimed processing system and the said second task is being performed in another processing system of the apparatus, to communicate the said waiting relation indication to that other processing system; registering means for registering such waiting relation indications generated by said lock managing means or received from another processing system of the apparatus; and deadlock detecting means operable, based on such waiting relation indications registered in said registering means, to detect a deadlock condition in which, for a group of tasks made up of at least two tasks of the said plurality, each task of the group is awaiting such a resource locked by another one of the tasks of the group and is unable to carry out further processing; characterised by waiting time monitoring means operable to detect when such a registered waiting relation indication persists for a predetermined time; and retry notification means operable, when such a persisting waiting relation indication is detected, to cause a retry notification to be applied to the task whose said request caused the persisting waiting relation indication to be generated, which notification serves to notify that task that it should make that request again, such that the waiting relation indication concerned can be communicated again to the said other processing system.

According to a third aspect of the present invention, there is provided a processing method, for use in a processing system in which a plurality of tasks use a set of common resources, comprising steps of: managing execution of the tasks so as to permit parallel execution of two or more of the said tasks; managing which resource is locked by which task, and, when a first one of the tasks makes a request for a resource which is already locked by a second one of the tasks, generating a waiting relation indication indicating that the first task is waiting for the second task; registering such a generated waiting relation indication; and detecting, based on such registered waiting relation indications, a deadlock condition in which, for a group of tasks made up of at least two tasks of the said plurality, each task of the group is awaiting such a resource locked by another one of the tasks of the group and is unable to carry out further processing; characterised in that a deadlock detection operation, for detecting such a deadlock condition, is performed independently of the task management and lock management, and, in the event that a waiting relation is generated during such an operation, registration of that indication is held back pending completion of the operation.

According to a fourth aspect of the present invention, there is provided a processing method, for use in distributed multitasking apparatus in which a plurality of processing systems are distributed and in which a plurality of tasks use a set of common resources, which processing method comprises steps of: managing execution of the tasks so as to permit parallel execution of two or more of the said tasks; managing which resource is locked by which task, and, when a first one of the tasks makes a request for a resource which is already locked by a second one of the tasks, generating a waiting relation indication indicating that the first task is waiting for the second task; when the said first task is being performed in a first one of the processing systems and the said second task is being performed in a second one of the processing system of the apparatus, communicating the said waiting relation indication from the first to the second processing system; registering such waiting relation indications generated or received from another processing system of the apparatus; and detecting, based on such registered waiting relation indications, a deadlock condition in which, for a group of tasks made up of at least two tasks of the said plurality, each task of the group is awaiting such a resource locked by another one of the tasks of the group and is unable to carry out further processing; characterised by detecting, in the said first processing system, when such a registered waiting relation indication persists for a predetermined time, and, when such a persisting waiting relation indication is detected, applying a retry notification to the task whose said request caused the persisting waiting relation indication to be generated, which notification serves to notify that task that it should make that request again, such that the waiting relation indication concerned can be communicated again to the said second processing system.

Such processing systems and methods can detect deadlocks whilst imposing a reduced burden on the system, by means of continuing detection of the deadlock even when a transaction waiting relation is changed during detection of the deadlock. In the case of a distributed system, such processing systems and methods can detect all deadlocks without detecting a phantom deadlock, reduce an overhead time in communication as much as possible, and reduce the effects on the system due to detection of the deadlocks even when delay or loss of communication message between systems are caused, when a transaction waiting relation is changed during detection of the deadlock, and when an asynchronous down of a system is caused.

Reference will now be made, by way of example, to the accompanying drawings, in which:
Fig. 1 is a block diagram illustrating a first embodiment of the present invention;
Fig. 2 is a block diagram illustrating a second embodiment of the present invention;
Fig. 3 is a block diagram illustrating a third embodiment of the present invention;
Fig. 4 is a view for use in describing a relation between a local wait-for-graph and a global wait-for-graph;
Fig. 5 is a flow chart illustrating operation of a transaction manager in Fig. 3;
Fig. 6 is a flow chart illustrating operation of a resource manager in Fig. 3;
Fig. 7 is a flow chart illustrating operation of a lock manager in Fig. 3;
Fig. 8 is a flow chart illustrating operation of a deadlock detector in Fig. 3;
Fig. 9 is a flow chart illustrating operation of a watchdog timer in Fig. 3; and
Fig. 10 is a view for use in describing a deadlock situation.

### First embodiment

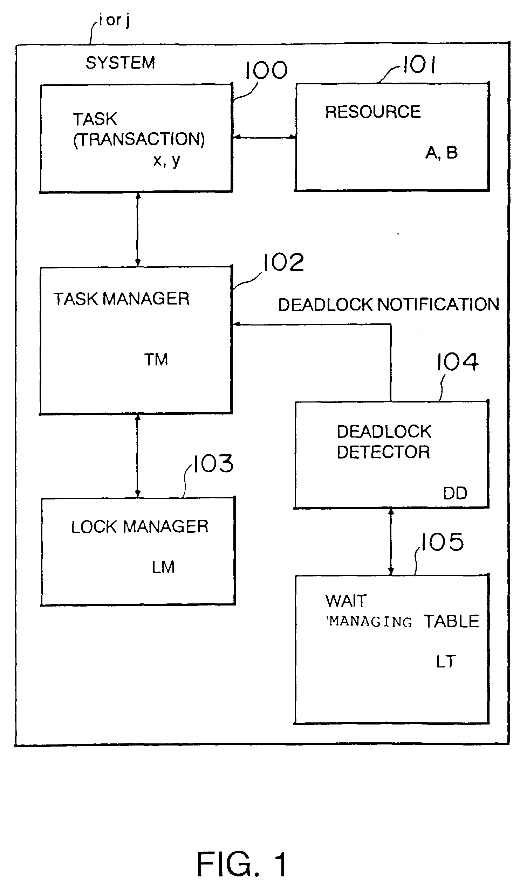

A first embodiment of the present invention is shown in Fig. 1. A deadlock detecting device according to the first embodiment detects deadlocks caused in a multitasking system in which a plurality of tasks 100 use a common resource 101.

Typical multitasking system comprises a task manager (TM) 102 and a lock manager (LM) 103. The task manager (TM) 102 manages execution of the tasks (x, y) 100 to allow execution of a plurality of tasks (x, y) 100 in parallel. The lock manager (LM) 103 detects and manages information regarding which task 100 is locking which resource 101 or waiting to lock which task 100.

In this embodiment, such a multitasking system is provided with a wait managing table (LT) 105 and a deadlock detector (DD) 104. The wait managing table (LT) 105 registers a "waiting relation" of the task. The deadlock detector (DD) 104 detects the deadlocks based on such "waiting relations" registered in this managing table (LT) 105.

A "task" usually means one or more sequence of instructions treated as a unit of work to be accomplished by a central processing unit (CPU). Here, the word "task" can also refer to a "transaction". A "transaction" means a set of operations for a complete data operation and is a concept involved in the "task", which is executed by programs. Embodiments of the present invention are directed to detecting the lock situation in which each program commonly uses the resource when a plurality of programs are executed in parallel at the same time. Thus, any difference in the meaning of these words is not significant in the context of the present invention and any one of the terms "task", "transaction", and "an execution unit to be accomplished by the programs" may be used interchangeably. The word "task" is used hereinafter as an equivalent to the word "transaction". In embodiments of the present invention, the resource 101 commonly used by the tasks 100 are files (a collection of data), records stored in the files, and so on. The word "lock" used here means that a task or a transaction exclusively uses the entire file or exclusively uses a record in the file.

In the present embodiment, deadlocks are detected in the following manner. A lock relation between the task (transaction) 100 and the resource 101, i.e. a "waiting relation", is registered in the above-mentioned wait managing table (LT) 105. The deadlock detector (DD) 104 looks up information in the wait managing table (LT) 105 in order to detect the deadlock. This detection is made independently of the task management made by the above-mentioned lock manager (LM) 103. Preferably, the deadlock detector (DD) 104 is required to register the "waiting relation" in the wait managing table (LT) 105 when the above-mentioned lock manager (LM) 103 detects that "a certain task is in the "waiting relation" for a certain resource". The presence or absence of the deadlock is determined by means of looking up the registered contents therein.

The following method may be used as a method of registering the waiting relation of the transaction in the wait managing table (LT) 105 for detecting the deadlock. The waiting relation of the transaction is expressed by a graph. This graph is also referred to herein as a wait-for-graph (WFG). This graph is registered in the above-mentioned wait managing table (LT) 105.

In this graph, the transaction x caused in the system i is defined as T(i, x) while the transaction y caused in the system j is defined as T(j, y). In addition, waiting of T(i, x) for T(j, y), i.e. waiting of T(i, x) for release of the resource 101 locked by T(j, y), is represented herein by:$\text{T(i, x) → T(j, y).}$ In this event, T(i, x) unable to proceed further operation until T(j, y) is terminated.

When$\text{T(i, x) → T(j, y)}$ and$\text{T(j, y) → T(i, x)}$ are held at the same time, a loop of$\text{T(i, x) → T(j, y) → T(i, x)}$ is formed. This case corresponds to the deadlock situation, so that detection of this loop allows detection of the deadlock.

The above description is for the detection of the deadlock between two systems. The deadlock in the own system i is represented by:$\text{T(i, x) → T(i, y) → T(i, x).}$

A feature of this embodiment lies in the fact that the deadlock detector (DD) 104 is provided in the systems (i, j) independently of blocks such as the task manager (TM) 102 or the lock manager (LM) 103. This can enable the deadlock detector to be operated in asynchronism with the task manager (TM) 102 and the lock manager (LM) 103.

In a conventional deadlock detecting method, execution of the individual tasks 101 is temporarily stopped to detect deadlocks, during which the presence or absence of the deadlock is determined according to lock information in the lock manager (LM) 103. It is, therefore, difficult to ensure smooth operation of the tasks 100.

On the contrary, in the present embodiment the wait managing table (LT) 105 is provided independently of the task manager (TM) 102 and the lock manager (LM) 103, and the lock information produced by the above-mentioned lock manager (LM) 103 is registered in the wait managing table (LT) 105. In addition, the deadlock detector (DD) 104 can operate independently of the execution of the tasks 100. The deadlock detector (DD) 104 determines the presence or absence of the deadlock according to the registered contents in the above-mentioned wait managing table (LT) 105 (which registered contents represent the waiting relations of the tasks 100) when the lock manager (LM) 103 produces information indicating that a task enters a state of waiting for a resource 101.

As mentioned above, in the present embodiment, the deadlock detector (DD) 104 is provided separately from (independently of) system elements such as the task manager (TM) 102 and the lock manager (LM) 103 required for executing the tasks 100. The deadlock detector (DD) 104 operates independently, so that it is not necessary to suspend execution of the tasks 100 for deadlock detection.

Detection of the deadlocks by the deadlock detector (DD) 104 in the present embodiment is made when the waiting relation of the task 100 is detected by the above-mentioned lock manager (LM) 103. More specifically, the deadlock detector (DD) 104 registers the waiting relation in the wait managing table (LT) 105 when the lock manager (LM) 103 detects the waiting relation of the task 100. This registration is used as a starting trigger for the deadlock detection. The deadlock detector (DD) 104 detects the presence or absence of the deadlock by means of looking up the wait managing table (LT) 105 in response to reception of the registration notification.

To register the above-mentioned "waiting relation" in the above-mentioned wait managing table (LT) 105, it is sufficient, when two or more tasks (x, y) 100 are present in the same system, to register the "waiting relation" of each task 100 only in the wait managing table (LT) 105 provided in that system.

On the other hand, if a task 100 in one system i is in the "waiting" state for a task in another system j (the "waited-for" system), this "waiting relation" is notified from that one system i to the wait managing table (LT) 105 of the other system j. The wait managing table (LT) 105 registers this "waiting relation" in response to this notification. At the same time as this registration, the deadlock detector (DD) 104 of the other system j looks up its wait managing table (LT) 105 to determine the presence or absence of the deadlock. It is also possible to notify the wait managing table (LT) 105 of system i of a "waiting relation" received from the other system j to determine the presence or absence of the deadlock by means of looking up this wait managing table (LT) 105.

The above-mentioned description is for a case where the "waiting relation" of the task 100 in system i and the "waiting relation" of the task 100 in the waited-for system j are both registered in the wait managing table (LT) 105 of system i. On the contrary, only the "waiting relation" of system i may be registered in the managing table (LT) 105 of system 1. In such a case, the wait-managing table (LT) of the waited-for system j is accessed through communication to detect the deadlock. The "waiting relation" of the task 100 in system i is compared (employed) with the "waiting relation" of the task 100 in the waited-for system j. If the above-mentioned loop is formed, this is detected as the deadlock.

According to this embodiment, when deadlock is confined to just one of the systems, no communication of information from that one system to other systems is made and deadlock is detected in that one system. The communication of the information is made only in cases when the deadlock arises among a group of tasks belonging to two or more systems. In most such cases, the deadlock arises among tasks belonging to two systems, so that the deadlock can be detected through one communication.

In this embodiment, the deadlock detector (DD) 104 is independent of and separated from the task manager (TM) 102 and lock manager (LM) 103, and thus the detection of the deadlocks will never affect the execution of the tasks 100.

When the deadlock is detected amongst a group of tasks, it is necessary for recovering from the deadlock to forcedly abort one task 100 of the group. It depends on the systems which task is forcedly aborted. For example, the task 100 having a starting time which is later than that of the others may be considered to have done the least amount of work and this task 100 may be aborted. Alternatively, the actual amount of work done by each task may be calculated, and the task 100 having done the least amount of work may then be aborted.

### Second embodiment

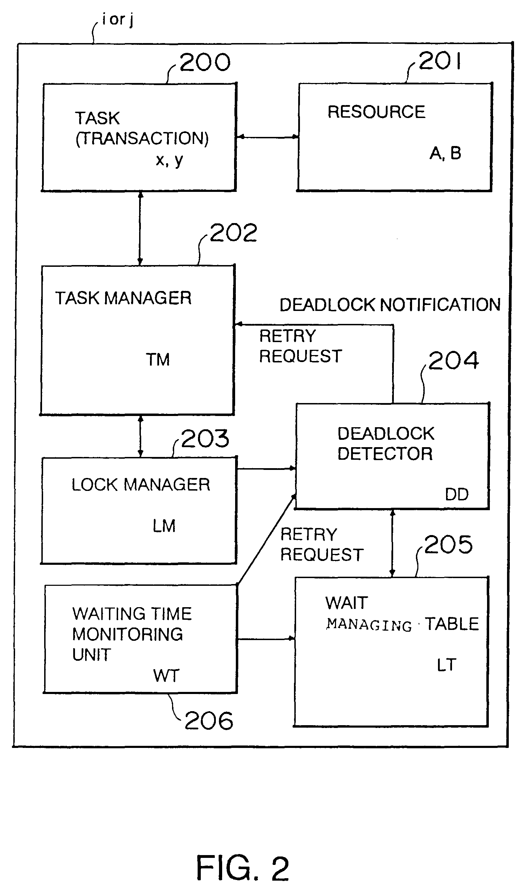

A second embodiment of the present invention is shown in Fig. 2. A deadlock detecting device according to the second embodiment detects the deadlocks caused in a multitasking system in which a plurality of tasks 200 use a common resource 201. This second embodiment is characterized by comprising a watchdog timer (WT) 206 along with the components described in the first embodiment. The watchdog timer (WT) 206 is a component for reissuing a resource gaining request for a task (transaction) 200 for which a "waiting relation" has persisted for a given period of time. The watchdog timer (WT) 206 is provided for the following reasons.

It is impossible to restore from the deadlock when the deadlock, even if caused, is not detected. A reason why a deadlock that is actually caused is not detected may be that the "waiting relation" information is not registered in the managing table (LT) 205 due to loss of communication. In this respect, when a "waiting relation" for a task 200 persists for a certain period of time, the watchdog timer (WT) 206 reissues the resource gaining request that caused the persisting "waiting relation" to be generated in the first place. As a result, there is a chance of transmitting again the "waiting relation" information to the wait managing table (LT) 205 in the waited-for system (system j for a "waiting relation" T(i, x) → T(j, y), thereby permitting the deadlock to be detected positively.

### Third embodiment

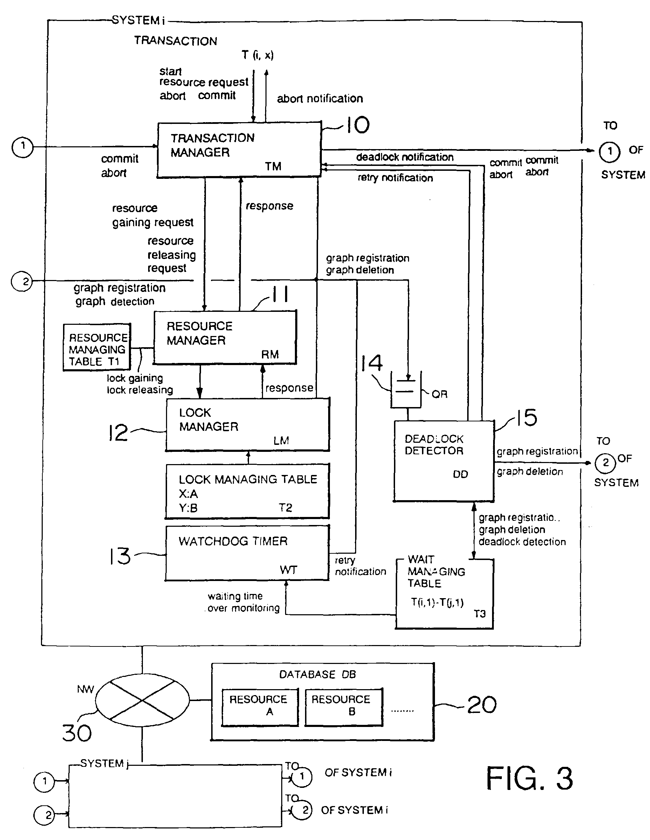

Fig. 3 shows a third embodiment of the present invention.

In this embodiment, the word "transaction" is used rather than the "task" that is used above. This third embodiment is a specific example of a case where the present invention is carried out in a distributed system.

### 〈General structure of the system〉

Fig. 3 shows the structure of a distributed system. In this distributed system, two computer systems (system i and system j) are provided in a distributed manner and are connected to each other through a network (NW) 30. In addition, a database (DB) 20 is connected to the computer systems i, j through the network (NW) 30. The computer systems are allowed to access the database (DB) 20. Such a system is applicable to, for example, an account system of a bank.

As is apparent from Fig. 3, each computer system (system i, j) comprises a transaction manager (TM) 10, a resource manager (RN) 11, a lock manager (LM) 12, a deadlock detector (DD) 15, a wait-for-graph table (wait managing table) T3, and a watchdog timer (WT) 13. The system j has the same structure as the system i. Accordingly, Fig. 3 shows details for only the system i and illustration of the detailed structure of the system j is omitted.

The database (DB) 20 stores a plurality of files or records as the resource. In Fig. 3, the resources A and B are provided as the resource.

Each component block is described in detail below.

### 〈Transaction Manager (TM)〉

The transaction manager (TM) 10 manages execution of two or more transactions. The transaction manager (TM) 10 can be referred to as the task manager (TM).

The transaction manager (TM) 10 is a block that receives communication indicative of start, commit or abort (see below) of the transaction from an application program in order to manage the transactions in the system. More specifically, when the transaction x is started in the system i, the data in the form of T(i, x) is registered while this data in the form of T(i, x) is deleted when the transaction x is terminated or aborted.

In response to acceptance of a request for a resource from the transaction, the transaction manager (TM) 10 passes the request to the resource manager (RM) 11 and receives a response (OK/NO) therefrom. The transaction manager (TM) 10 also accepts a deadlock notification transmitted from the deadlock detector (DD) 15 indicating that a transaction is to be aborted. In addition, the transaction manager (TM) 10 accepts a retry notification transmitted from the deadlock detector (DD) 15 to reissue a resource gaining request to the resource manager (RM) 11. The transaction manager (TM) 10 also receives a communication indicative of the commit or the abort of a transaction in another computer system (system j) In response to this, the transaction manager (TM) 10 requests the deadlock detector (DD) 15 to register or delete the wait-for-graph.

In Fig. 3, "start" means to start execution of the transaction while "abort" means to abort the transaction. "Commit" means to commit the transaction.

Resource gaining requests and resource releasing requests in the transaction manager (TM) 10 are carried out in a two-phase lock (2PL) system. This system is effective by consideration of avoiding detection of the phantom deadlocks.

The phantom deadlock is typically caused when registration and deletion of graphs compete with each other. For example, when a graph of$\text{T(i, x) → T(j, y)}$ is already registered, it is assumed that a request for deleting$\text{T(i, x) → T(j, y)}$ and a request for registering$\text{T(j, y) → T(i, x)}$ are generated at the same time and communicated to the deadlock detector (DD) 15. In such a case, no deadlock is caused when the request for deletion is accepted first. On the contrary, the phantom deadlock is caused when the request for registration is accepted first. The request for deleting$\text{T(i, x) → T(j, y)}$ is generated when the waiting relation expressed by this graph is given up (i.e. when T(j, y) releases the lock on the resource). Release of the lock is made either when the transaction itself releases the lock on the own resource or when the transaction is aborted asynchronously.

The two-phase locking protocol is a locking protocol consisting of two phases; when data once locked by the transaction goes on being locked and that once unlocked goes on being unlocked. According to this protocol, the same result can be obtained as a plurality of tasks or transactions are serially executed. According to this system, provided is the same result as the tasks or transactions are executed sequentially.

If the transaction is assumed not to be aborted asynchronously, this system ensures that no additional request for lock gaining will be generated once the lock is released. In other words, the graph$\text{T(i, x) → T(j, y)}$ once generated is not deleted until T(j, y) is terminated. Accordingly, when the request for deletion of$\text{T(i, x) → T(j, y)}$ is generated, T(j, y) has already been terminated and thus no additional request for gaining the resource is made by T(j, y). Thus, it is possible to ensure that a request for registering$\text{T(j, y) → T(i, x)}$ is not generated.

For the above-mentioned reasons, it is possible by means of applying this system to restrict the cause of phantom deadlocks to situations where a transaction is asynchronously aborted.

### 〈Resource Manager (RM)〉

The resource manager (RM) 11 is connected to the transaction manager (TM) 10 in a two-way manner. The resource manager (RM) 11 comprises a resource managing table T1. The resource manager (RM) 11 maps and manages in the resource managing table T1 a corresponding relation between a transaction and the resource requested by the transaction according to the contents of the resource gaining request and the resource releasing request supplied from the transaction manager (TM) 10.

The resource manager (RM) 11 issues a lock request to the lock manager (LM) 12 in response to the resource gaining request supplied from the transaction manager (TM) 10. The resource manager (RM) 11 issues a lock releasing request to the lock manager (LM) 12 in response to the resource releasing request supplied from the transaction manager (TM) 10.

### 〈Lock Manager (LM)〉

The lock manager (LM) 12 is connected to the resource manager (RM) 11 in a two-way manner. The lock manager (LM) 12 comprises a lock managing table T2. The lock manager (LM) 12 is a control unit for controlling the lock conditions using the lock managing table T2.

In a case where the transactions x, y and the resources A, B are provided and when the transaction x locks the resource A while the transaction y locks the resource B, the lock manager (LM) 12 registers this relation in the lock managing table T2. More specifically, as shown in Fig. 3, a situation where x locks A is defined as, for example, (x:A) while a situation where y locks B is defined as (y:B). The lock manager (LM) 12 registers this information in the lock managing table T2. The lock managing table is used for managing lock information for the transactions in the other computer system (j or i) as well as for managing the lock information for the transactions in the own computer system (i or j). The lock information for the transactions in any other systems can be obtained through communication between the computer systems. Alternatively, necessity for the commununication between the computer systems can be eliminated by means of creating a single lock managing table T2 on a common memory that is commonly used by the computer system (i, j) and managing generally the lock information for all transactions.

In the above-mentioned situation, it is further assumed that the resource manager (RN) 11 issues a lock request for the resource B by the transaction x and a lock request for the resource A by the transaction y. Then, the lock manager (LM) 12 looks up the information in the lock managing table T2 check whether it is impossible to make such lock. If it is impossible, the transaction y waits for the release of the lock on the resource A by the transaction x while the transaction x waits for the release of the lock on the resource B by the transaction y. These situations are defined as (x → B) and (y → A). When these definitions are generated, the lock manager (LM) 12 determines that "waiting" is caused. In this embodiment, such a "waiting relation" is registered and managed in a wait-for-graph table T3 independent of the lock manager (LM 12). When the "waiting relation" is caused, the lock manager (LM) 12 requests the deadlock detector (DD) 15 to register the graph according to the above-mentioned definitions. In requesting this, the deadlock detector (DD) 15 is also supplied with information relating to the transactions (x, y); this information specifies in which computer the transaction is executed and also specifies by which transaction in which computer system the resources (A, B) are currently locked.

The lock manager (LM) 12 immediately returns a response (OK) to the resource manager (RM) 11 when the lock request from the resource manager (RM) 11 is to be granted, that is, the request is not waiting other transaction. A new entry is made in a registration requesting queue for registering the wait-for-graph, indicative of the waiting relation, in the wait-for-graph table T3 only when the "waiting" situation is caused, according to the determination by the lock manager (LM) 12. The execution of a transaction which requires the gain of a resource is not stopped or suspended, when the request is not expected to be "waiting" on another transaction whether or not detection of deadlocks is taking place.

### 〈Deadlock Detector (DD)〉

The deadlock detector (DD) 15 is a portion to determine the presence or absence of the deadlock according to the contents registered in the wait-for-graph table (T3).

The deadlock detector (DD) 15 comprises a request queue receiving unit (QR) 14. The request queue receiving unit (QR) 14 in system i receives wait-for-graph registration requests and wait-for-graph deletion requests from the lock manager (LM) 12 in its own computer system i. In addition, the request queue receiving unit (QR) 14 receives wait-for-graph registration requests from other computer systems j. Further, when the transaction in another system j is aborted or committed, the request queue receiving unit (QR) 14 receives a wait-for-graph deletion request from the transaction manager (TM) 10. The deadlock detector (DD) 15 registers the wait-for-graph in or deletes it from the wait-for-graph table T3 according to these requests. The format of this wait-for-graph is as follows. For example, if the transaction x caused in the system i = T(i, x) and the transaction y caused in the system j = T(j, y), then waiting of T(i, x) for T(j, y) is represented by$\text{T(i, x) → T(j, y).}$

To register a wait-for-graph representing this waiting relation, the deadlock detector (DD) 15 creates the wait-for-graph according to the information notified from the lock manager (LM) 12.

When the wait-for-graph is registered, the deadlock detector (DD) 15 starts detection of the deadlock. When the deadlock is detected, the deadlock detector (DD) 15 notifies the transaction manager (TM) 10 of the deadlock.

When a request for deleting the graph is received, the graph in question is deleted and the deadlock detector (DD) notifies the waiting transaction to retry for a lock of the resource concerned.

### 〈Wait-for-graph Table (T3)〉

The wait-for-graph table T3 is provided with wait-for-graphs that are registered therein. As mentioned above, it is assumed that the transaction x caused in the system i = T(i, x) and the transaction y caused in the system j = T(j, y), and that waiting of T(i, x) for T(j, y) is represented by$\text{T(i, x) → T(j, y).}$ In such a case, the transaction x is not allowed to use a resource B that has been locked by the transaction y until transaction y gives up its lock on resource B, for example T(j, y) terminates. This situation is referred to as the "waiting relation" in which "T(i, x) waits for T(j, y)." The deadlock detector (DD) 15 registers this graph of$\text{T(i, x) → T(j, y)}$ in the wait-for-graph table T3 as the "waiting relation".

On the other hand, this graph of$\text{T(i, x) → T(j, y)}$ may be held at the same time as$\text{T(j, y) → T(i, x)}$ is held. In such a case, the transaction y is not allowed to use a resource A that has been locked by transaction x until transaction x gives up its lock on resource A, for example T(i, x) terminates. A loop of$\text{T(i, x) → T(j, y) → T(j, y) → T(i, x)}$ is formed with these two waiting relations. Accordingly, detection of this loop corresponds to the situation where the deadlock is caused.

The waiting relation is caused between the transaction x of the system i and the transaction y of the system j. The graph of$\text{T(i, x) → T(j, y)}$ is registered in the wait-for-graph table T3 of the system i while the graph of$\text{T(j, y) → T(i, x)}$ is registered in the wait-for-graph table T3 of the system j. Accordingly, the graph registered in either one of the two systems should be transmitted to the other system to enable the two graphs to be compared with each other. In this embodiment, when the "waiting relation" is registered, this "waiting relation" is also transmitted to the waited-for system. That is, when$\text{T(i, x) → T(j, y)}$ is registered in the wait-for-graph table T3 of the system i, the deadlock detector (DD) 15 of the system i transmits the same waiting relation to the wait-for-graph table T3 of system j, and causes it to be registered in that table.

As a result, it becomes possible to detect the deadlock in the waited-for system (i.e. the system j) by means of looking up the wait-for-graph table T3 of system j. When the "waiting relation" of the transaction x is given up, the information regarding to the "waiting relation" on the transaction x should be "recovered" (deleted) from the waited-for system (i.e. the system j), otherwise the deadlock is detected continuously. Accordingly, it is necessary to delete or recover the graph indicating the "waiting relation" from the wait-for-graph table T3 of the waited-for system (i.e. the system j) when the "waiting relation" is eliminated. The deadlock detector (DD) 15 also has a function of deleting and recovering the graph.

Detection of no graph of the wait-for-graph indicates that there is a possibility of the deadlock in the other system if the top end of the wait-for-graph is the transaction in the other system. Thus, the other system in question is required to register the graph. To accept a request of registering the graph issued by other systems, the deadlock detector (DD) 15 registers a necessary graph to detect the loop.

A waiting relation may be caused just by transactions in the own system. For example, when a transaction x1 = T(i, x1) caused in the system i waits for a transaction y1 = T(i, y1) caused only in the own system (i.e. the system i),$\text{T(i, x1) → T(i, y1)}$ is registered in the wait-for-graph table T3 of the own system (i.e. the system i). In this event, if$\text{T(i, y1) → T(i, x1)}$ is registered in the wait-for-graph table T3 of the own system (i.e. the system i), a loop of$\text{T(i, x1) → T(i, y1) → T(i, y1) → T(i, x1)}$ is formed, according to which the deadlock can be detected.

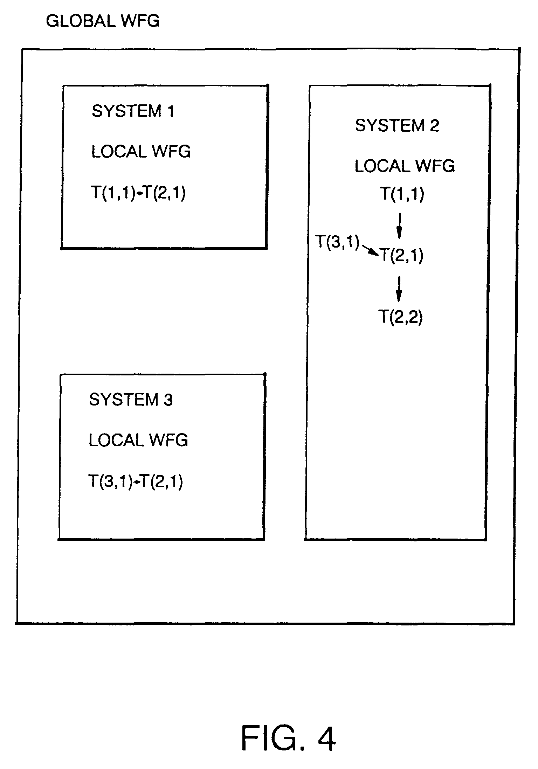

In a distributed system, the registered contents of the wait-for-graph table relating to the transactions caused in a given system may be referred to collectively as a local wait-for-graph of that system. In addition, a graph representing the waiting relations in the entire distributed system, i.e. a set of all the local wait-for-graphs in that distributed system, may be referred to as a global wait-for-graph. Fig. 4 is a view illustrating an exemplified relation between local and global wait for graphs.

In each computer system, only the local wait-for-graph is managed in the wait-for-graph table T3. In this embodiment, as mentioned above, the deadlock detector (DD) 15 of system i does not transmit to another computer system j the registered contents such as the graph indicating the waiting relation between the transactions only in system i (its "own" system). On the other hand, the deadlock detector (DD) 15 transmits the graph indicating the waiting relation between a transaction in the other computer system j and a transaction in its own computer system i only to the associated system j. Considering that statistically 90% or more of deadlocks are caused between two tasks, deadlock involving a transaction in another system can accordingly most often be detected with one communication. In addition, deadlock caused within one computer system can be detected without communication. Accordingly, it becomes possible to reduce the overhead time required for the communication to detect the deadlocks.

### 〈Watchdog Timer〉

The watchdog timer (WT) 13 is a timer for use in monitoring the wait-for-graph table T3. This timer 13 monitors the "waiting relations" registered in the wait-for-graph table T3. If a "waiting relation" has persisted for a predetermined time since the "waiting relation" was registered, the watchdog timer (WT) 13 issues a retry notification to make the waiting transaction in the "waiting relation" reissue the resource gaining request. The retry notification is supplied to the request queue receiving unit (QR) 14. When the retry notification is supplied to the request queue receiving unit (QR) 14, the deadlock detector (DD) 15 sends the retry notification to the transaction manager (TM) 10. In response to this retry signal, the transaction manager (TM) 10 reissues the resource gaining request to the transaction in the waiting relation.

A deadlock that is actually caused may not be detected as a result of delay or loss of a communication message between the systems or an asynchronous down of the computer system. The watchdog timer (WT) 13 is for avoiding such trouble. More specifically, when the computer systems i and j perform communication with each other in the distributed system, a graph needed to detect a deadlock situation may be lost due to loss of a communication message between the systems. This makes the detection of the deadlock impossible. To avoid this, the watchdog timer (WT) 13 is provided as a mechanism for monitoring the transactions in the waiting relation.

As mentioned above, a transaction that is in a waiting relation, for which the corresponding wait-for-graph has been registered in the table T3 for a predetermined time or longer, is caused by the timer 13 to reissue the resource gaining request through the deadlock detector (DD) 15. In response to this, the transaction manager (TM) 10 reissues the resource gaining request. If the transaction is no longer required to wait, then the resource gaining request is accepted. On the other hand, if the transaction is still required to wait, the graph is again transmitted to the other computer system. This makes up for the loss of the graph and thus the deadlock can be detected.

### 〈Exemplified Operation in each component〉

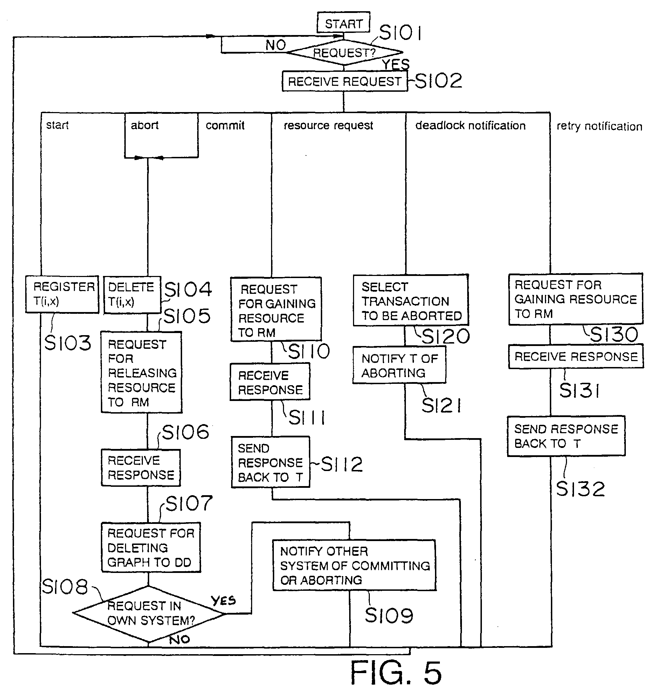

Operation in the above-mentioned components is described in conjunction with the flow charts of Figs. 5 to 9.

### [Operation of the Transaction Manager (TM)]

As shown in the flow chart of Fig. 5, the transaction manager (TM) 11 waits for a request such as the start, the abort, the commit, the resource gaining request, the deadlock notification and the retry notification (Step 101). The abort and the commit used herein includes those notified from other computer systems. When any one of these requests is received (Step 102), the transaction manager (TM) 10 allocates the processing according to the type of the request.

When the request received at the step 102 is start, this transaction (referred to as T(i, x) for convenience) is registered in the transaction manager (TM) 10 itself (Step 103) and the transaction manager waits for a subsequent request.

When the request received at the step 102 is abort or commit, the transaction to be aborted or committed (referred to as T(i, x) for convenience) is deleted (Step 104). Next, the transaction manager (TM) 10 issues a resource releasing request to the resource manager (RM) 11 (Step 105). When a response to the resource releasing request is received from the resource manager (RM) 11 (Step 106), the transaction manager (TM) 10 requests the deadlock detector (DD) 15 to delete the graph (Step 107). Subsequently, the transaction manager (TM) 10 determines whether the request in question is from its own computer system (Step 108). If the request has been transmitted from the other computer system, no operation is made at this time. On the contrary, if the request is from its own computer system, commit or abort is notified to the other computer system (Step 109). The computer system receiving the notification then carries out processing according to steps 104 through 107.

When the request received at the step 102 is a resource gaining request, the transaction manager (TM) 10 supplies the resource gaining request to the resource manager (RM) 11 (Step 110). When a response to the request is received from the resource manager (RM) 11 (Step 111), the transaction manager (TM) 10 sends a response to the transaction (Step 112).

When the request received at the step 102 is a deadlock notification, the transaction manager (TM) 10 first selects the transaction to be aborted from the transactions in the deadlock situation (Step 120). More specifically, all transactions in the deadlock relation (referred herein to as T(i, x), T(j, y) for convenience) are specified in the deadlock notification. The transaction manager (TM) 10 thus selects the transaction to be aborted based on the named (specified) transactions included in the deadlock notification. Accordingly, the transaction manager (TM) 10 is allowed to specify a transaction in another computer system as the transaction to be aborted. Subsequently, the transaction manager (TM) 10 notifies the selected transaction that the transaction is to be aborted (Step 121). If the selected transaction is in the other computer system, the transaction manager (TM) 10 notifies the selected transaction, through the transaction manager (TM) 10 of the other computer system, that the transaction is to be aborted.

When the request received at the step S102 is a retry notification, the transaction manager (TM) 10 first supplies the resource gaining request to the resource manager (RM) 11 (Step 130). When a response to this request is received from the resource manager (RM) 11 (Step 131), the transaction manager (TM) 10 sends a response back to the transaction (Step 131).

### [Operation of the Resource Manager (RM)]

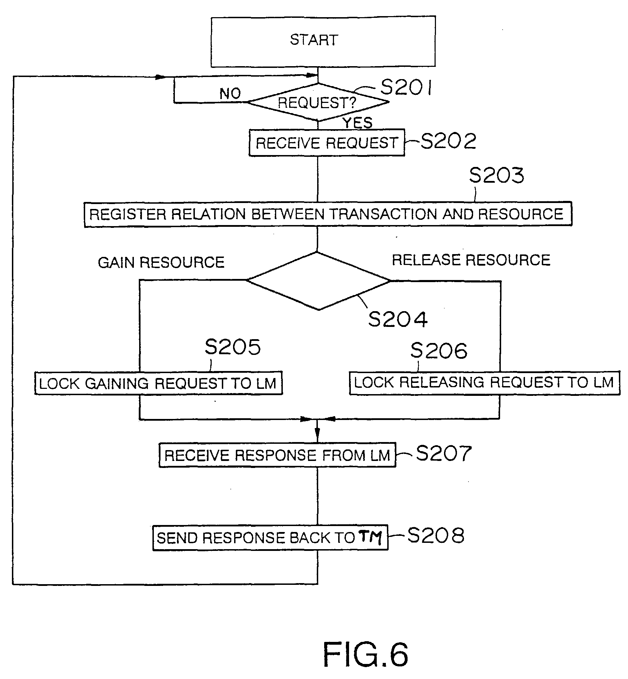

As is apparent from the flow chart shown in Fig. 6, the resource manager (RM) 11 first waits for the resource gaining request and the resource releasing request (Step 201). When either one of the requests is made and received (step 202), the resource manager (RM) 11 attempts to lock the resource shown in the resource gaining request and registers the relation in the resource managing table T1 (Step 203). In other words, the resource manager (RM) 11 registers which transaction is trying to lock which resource.

Subsequently, the resource manager (RM) 11 determines whether the request is a resource gaining request or a resource releasing request (Step 204). When the request is a resource gaining request, the resource manager (RM) 11 supplies the lock gaining request to the lock manager (LM) 12 (Step 205). On the contrary, when the request is the resource releasing request, the resource manager (RM) 11 supplies the lock releasing request to the lock manager (LM) 12 (Step 206).

After receiving a response (OK/NO) from the lock manager (LM) 12 to the lock gaining request or the lock releasing request (Step 207), the resource manager (RM) 11 sends a response (OK/NO) back to the transaction manager (TM) 10 (Step 208).

### [Operation of the Lock Manager (LM)]

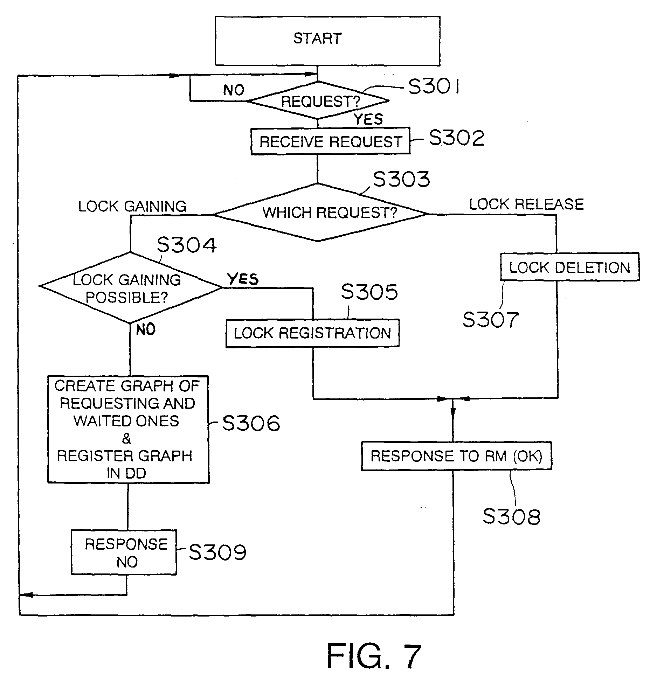

As is apparent from the flow chart shown in Fig. 7, in response to the request at the step 205 or step 206 in Fig. 6 from the resource manager (RM) 11 (Step 301), the lock manager (LM) 12 receives the request (Step 302). Subsequently, the lock manager (LM) 12 determines whether the request is a lock gaining request or a lock releasing (Step 303). When the request is the lock gaining request, the lock manager (LM) 12 determines whether it is possible to gain the lock (Step 304). If the lock on the resource is available, the lock manager (LM) 12 registers the lock situation in the lock managing table T2 (Step 305). On the contrary, if it is impossible to gain the lock on the resource, indicating that there is a "waiting relation," the lock manager (LM) 12 requests the deadlock detector (DD) 15 to register the relation between the requesting transaction and the waited-for transaction (the transaction for which the requesting transaction is waiting) as a wait-for-graph (WFG) in the wait-for-graph table T3 (Step 306).

Subsequently, the lock manager (LM) 12 notifies the resource manager (RM) 11 that it has failed to lock the resource (that is, "NO") (Step 309). If the request is determined to be a resource releasing request at the step 303, then the lock manager (LM) 12 deletes the registration of the lock from the lock managing table T2 (Step 307). Then the lock manager (LM) 12 sends a response (that is, "OK") indicating completion of the registration or the deletion to the resource manager (RM) 11 (Step 308).

### [Operation of the Deadlock Detector (DD)]

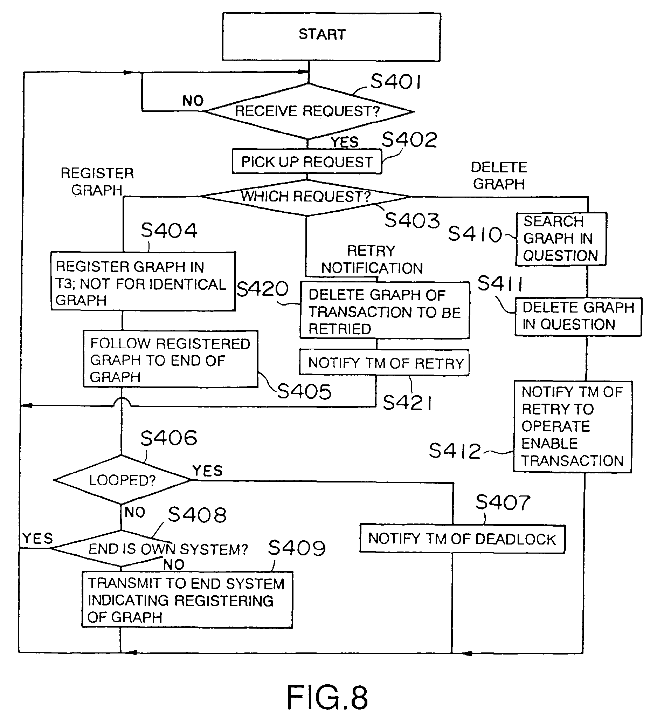

As is apparent from the flow chart illustrated in Fig. 8, the deadlock detector (DD) 15 receives the graph registering request, the graph deleting request and the retry notification at the request queue receiving unit (QR) 14. Accordingly, in response to the request (step 401), the deadlock detector (DD) 15 picks up the request from the request queue receiving (QR) 14 (Step 402) to determine the type of the request (403).

When the request is directed to the graph registration, the deadlock detector (DD) 15 first registers the wait-for-graph in the wait-for-graph table T3 (Step 404). If it is found, as a result of searching through the wait-for-graph table T3, that the same graph has already been registered therein, the deadlock detector (DD) 15 does not register the graph at that time. Next, the deadlock detector (DD) 15 follows the registered graph up to the top end thereof (Step 405). According to the result of this, the deadlock detector (DD) 15 determines whether a loop is formed (Step 406). If a loop is formed, the deadlock detector (DD) 15 notifies the transaction manager (TM) 10 of the deadlock (Step 407). If no loop is formed, the deadlock detector (DD) 15 determines whether the top end of the graph is a transaction in its own computer system (Step 408). If the end is a transaction in its own computer system, then control returns to step 401. On the other hand, if the top end of the graph is a transaction in another computer system, the deadlock detector (DD) 15 sends the graph in question to the deadlock detector (DD) 15 of that other computer system to make it register the graph in the wait-for-graph table T3 of that other computer system (Step 409).

When the request at the step 403 is directed to delete the graph, the deadlock detector (DD) 15 searches through the wait-for-graph table T3 to find the graph in question (Step 410). When the graph in question is found, the deadlock detector (DD) 15 deletes this graph (Step 411). Subsequently, the deadlock detector (DD) 15 supplies a retry notification to the transaction manager (TM) 10 to notify the transaction that was indicated in the deleted graph as being waiting that it should again request the resource for which it was waiting (Step 412). When the request at the step 403 is a retry request, the deadlock detector (DD) 15 deletes the graph of the transaction to be retried (Step 420). Then the deadlock detector (DD) 15 supplies a retry notification to the transaction manager (TM) 10 (Step 421).

### [Operation of the Watchdog Timer (WT)]

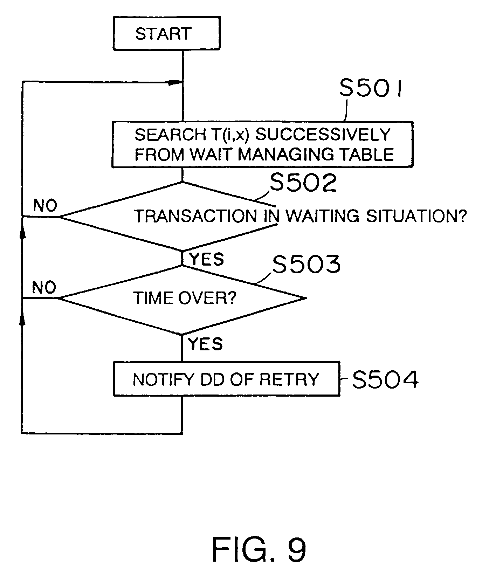

As apparent from the flow chart illustrated in Fig. 9, the watchdog timer (WT) 13 sequentially searches the transactions (such as T(i, x)) registered in the wait-for-graph table T3 (Step 501). Subsequently, the watchdog timer (WT) 13 determines whether the transaction x is in the "waiting relation" (Step 502). If the searched transaction is not in the "waiting relation," the step 501 is again executed. On the other hand, if the searched transaction is in the "waiting relation," the watchdog timer (WT) 13 starts to count the time. When a predetermined time has elapsed (Step 503), the watchdog timer (WT) 13 supplies a retry notification to the deadlock detector (DD) 15 (Step 504). When the "waiting relation" is eliminated at step 503 before the predetermined time is elapsed, step 501 is again executed (Step 502).

### 〈Specific Examples of the Deadlock Detection〉

Next, examples of the deadlock detection carried out by the above-mentioned components are described for three different cases.

### [Example 1 Detection of Deadlock between two transactions, both of which are in the "Own" Computer System]

An example 1 relates to deadlock detection in a computer system in the case in which the two "deadlocked" transactions are both in the computer system 1 (the "own" computer system). More specifically, the following operations are carried out. This example reveals that communication is not established with other computer systems in this case.
(1) First, it is assumed that transaction T(1, 1) notifies the transaction manager (TM) 10 of initiation of the transaction.
(2) The transaction manager (TM) 10 registers transaction T(1, 1).
(3) Separately, it is assumed that transaction T(1, 2) notifies the transaction manager (TM) 10 of initiation of the transaction.
(4) The transaction manager (TM) 10 registers transaction T(1, 2).
(5) It is assumed that transaction T(1, 1) asks for the resource A to the transaction manager (TM) 10.
(6) The transaction manager (TM) 10 then makes a request to gain the resource A to the resource manager (RM) 11.
(7) The resource manager (RM) 11 makes a request to gain a lock on the resource A to the lock manager (LM) 12.
(8) The lock manager (LM) 12 sends OK back to the resource manager (RM) 11 if the resource A is not locked.
(9) The resource manager (RM) 11 sends a response OK to the transaction manager (TM) 10.
(10) On the other hand, it is assumed that transaction T(1, 2) asks for the resource B to the transaction manager (TM) 10.
(11) The transaction manager (TM) 10 then makes a request to gain the resource B to the resource manager (RM) 11.
(12) The resource manager (RM) 11 makes a request to gain a lock on the resource B to the lock manager (LM) 12.
(13) The lock manager (LM) 12 sends OK back to the resource manager (RM) 11 if the resource B is not locked.
(14) The resource manager (RM) 11 sends a response OK to the transaction manager (TM) 10.
(15) At that time, it is assumed that transaction T(1, 1) asks the transaction manager (TM) 10 for the resource B.
(16) The transaction manager (TM) 10 then makes a request to gain the resource B to the resource manager (RM) 11.
(17) The resource manager (RM) 11 makes a request to gain a lock on the resource B to the lock manager (LM) 12.
(18) However, the resource B has already been locked by transaction T(1, 2), so that transaction T(1, 1) waits for transaction T(1, 2). Accordingly, the lock manager (LM) 12 requests the deadlock detector (DD) 15 to register the graph$\text{T(1, 1) → T(1, 2).}$ The deadlock detector (DD) 15 receiving the request registers the graph in the wait-for-graph table T3.
(19) On the other hand, it is assumed that transaction T(1, 2) asks for the resource A to the transaction manager (TM) 10.
(20) The transaction manager (TM) 10 then makes a request to gain the resource A to the resource manager (RM) 11.
(21) The resource manager (RM) 11 makes a request to gain a lock on the resource A to the lock manager (LM) 12.
(22) However, the resource A has already been locked by transaction T(1, 1), so that transaction T(1, 2) waits for transaction T(1, 1). Accordingly, the lock manager (LM) 12 requests the deadlock detector (DD) 15 to register the graph$\text{T(1, 2) → T(1, 1).}$ The deadlock detector (DD) 15 receiving the request registers the graph in the wait-for-graph table T3. (23) The deadlock detector (DD) 15 detects the loop and notifies the transaction manager (TM) 10 of the presence of the deadlock.

### [Example 2 Detection of the Deadlock between two transactions in different respective Computer Systems]

An example 2 involves a case where the deadlock is caused between two computer systems (system 1 and system 2) . This example reveals that communication between the systems for deadlock detection purposes is made only once.
(1) First, it is assumed that transaction T(1, 1) of the system 1 notifies the transaction manager (TM) 10 of the system 1 of initiation of the transaction.
(2) The transaction manager (TM) 10 of the system 1 registers transaction T(1, 1).
(3) It is assumed that transaction T(1, 1) asks the transaction manager (TM) 10 of the system 1 for the resource A.
(4) The transaction manager (TM) 10 of the system 1 then makes a request to gain the resource A to the resource manager (RM) 11.
(5) The resource manager (RM) 11 of the system 1 makes a request to gain a lock on the resource A to the lock manager (LM) 12.
(6) The lock manager (LM) 12 of the system 1 sends OK back to the resource manager (RM) 11 if the resource A is not locked.
(7) The resource manager (RM) 11 of the system 1 sends a response OK to the transaction manager (TM) 10.
(1)' separately, it is assumed that transaction T(2, 1) of the system 2 notifies the transaction manager (TM) 10 of the system 2 of the initiation of the transaction.
(2)' The transaction manager (TM) 10 of the system 2 registers transaction T(2, 1).
(3)' It is assumed that transaction T(2, 1) asks the transaction manager (TM) 10 of the system 2 for the resource B.
(4)' The transaction manager (TM) 10 of the system 2 then makes a request to gain the resource B to the resource manager (RM) 11.
(5)' The resource manager (RM) 11 of the system 2 makes a request to gain a lock on the resource B to the lock manager (LM) 12.
(6)' The lock manager (LM) 12 of the system 2 sends OK back to the resource manager (RM) 11 if the resource B is not locked.
(7)' The resource manager (RM) 11 of the system 2 sends a response OK to the transaction manager (TM) 10.
(8) At that time, it is assumed that transaction T(1, 1) asks the transaction manager (TM) 10 of the system 1 for the resource B.
(9) The transaction manager (TM) 10 of the system 1 then makes a request to gain the resource B to the resource manager (RM) 11.
(10) The resource manager (RM) 11 of the system 1 makes a request to gain a lock on the resource B to the lock manager (LM) 12.
(11) However, the resource B has already been locked by transaction T(2, 1) of the system 2, so that transaction T(1, 1) waits for transaction T(2, 1). Accordingly, the lock manager (LM) 12 of the system 1 requests the deadlock detector (DD) 15 to register the graph$\text{T(1, 1) → T(2, 1).}$
(12) In response to this request, the deadlock detector (DD) 15 of the system 1 sends the graph$\text{T(1, 1) → T(2, 1)}$ to the system 2. At the same time, the deadlock detector (DD) 15 of the system 1 registers the graph the wait-for-graph table T3 of the system 1.
(13) The deadlock detector (DD) 15 of the system 2 receives the graph$\text{T(1, 1) → T(2, 1)}$ and registers it in the wait-for-graph table T3 of the system 2.
(14) Subsequently, it is assumed that transaction T(2, 1) asks the transaction manager (TM) 10 of the system 2 for the resource A.
(15) The transaction manager (TM) 10 of the system 2 then makes a request to gain the resource A to the resource manager (RM) 11.
(16) The resource manager (RM) 11 of the system 2 makes a request to gain the lock on the resource A to the lock manager (LM) 12.
(17) However, the resource A has already been locked by transaction T(1, 1) of the system 1, so that transaction T(2, 1) waits for transaction T(1, 1). Accordingly, the lock manager (LM) 12 of the system 2 requests the deadlock detector (DD) 15 to register the graph$\text{T(2, 1) → T(1, 1).}$
(18) The deadlock detector (DD) 15 of the system 2 detects the loop and notifies the transaction manager (TM) 10 of the system 2 of the presence of the deadlock.

### [Example 3 Message is lost during Detection of the Deadlock between two transactions in different respective Computer Systems]

An example 3 involves a case where a message is lost due to a communication error caused between two computer systems (system 1 and system 2).
(1) First, it is assumed that transaction T(1, 1) of the system 1 notifies the transaction manager (TM) 10 of the system 1 of initiation of the transaction.
(2) The transaction manager (TM) 10 of the system 1 registers transaction T(1, 1).
(3) It is assumed that transaction T(1, 1) asks the transaction manager (TM) 10 of the system 1 for the resource A.
(4) The transaction manager (TM) 10 of the system 1 then makes a request to gain the resource A to the resource manager (RM) 11.
(5) The resource manager (RM) 11 of the system 1 makes a request to gain a lock on the resource A to the lock manager (LM) 12.
(6) The lock manager (LM) 12 of the system 1 sends OK back to the resource manager (RM) 11 if the resource A is not locked.
(7) The resource manager (RM) 11 of the system 1 sends a response OK to the transaction manager (TM) 10.
(1)' Separately, it is assumed that transaction T(2, 1) of the system 2 notifies the transaction manager (TM) 10 of the system 2 of initiation of the transaction.
(2)' The transaction manager (TM) 10 of the system 2 registers transaction T(2, 1).
(3)' It is assumed that transaction T(2, 1) asks the transaction manager (TM) 10 of the system 2 for the resource B.
(4)' The transaction manager (TM) 10 of the system 2 then makes a request to gain the resource B to the resource manager (RM) 11.
(5)' The resource manager (RM) 11 of the system makes a request to gain a lock on the resource B to the lock manager (LM) 12.
(6)' The lock manager (LM) 12 of the system 2 sends OK back to the resource manager (RM) 11 if the resource B is not locked.
(7)' The resource manager (RM) 11 of the system 2 sends a response OK to the transaction manager (TM) 10.
(8) At that time, it is assumed that transaction T(1, 1) asks the transaction manager (TM) 10 of the system 1 for the resource B.
(9) The transaction manager (TM) 10 of the system 1 then makes a request to gain the resource B to the resource manager (RM) 11.
(10) The resource manager (RM) 11 of the system 1 makes a request to gain a lock on the resource B to the lock manager (LM) 12.
(11) However, the resource B has already been locked by transaction T(2, 1) of the system 2, so that transaction T(1, 1) waits for transaction T(2, 1). Accordingly, the lock manager (LM) 12 of the system 1 requests the deadlock detector (DD) 15 to register-the graph$\text{T(1, 1) → T(2, 1).}$
(12) In response to this request, the deadlock detector (DD) 15 of the system 1 registers the graph in the wait-for-graph table T3 of the system 1. At the same time, the deadlock detector (DD) 15 of the system 1 sends the graph$\text{T(1, 1) → T(2, 1)}$ to the system 2.
(13) However, the transmitted content does not arrive at the system 2 because it is lost as a result of a communication error.
(14) Subsequently, it is assumed that transaction T(2, 1) asks the transaction manager (TM) 10 of the system 2 for the resource A.
(15) The transaction manager (TM) 10 of the system 2 then makes a request to gain the resource A to the resource manager (RM) 11.
(16) The resource manager (RM) 11 of the system 2 makes a request to gain a lock on the resource A to the lock manager (LM) 12.
(17) However, the resource A has already been locked by transaction T(1, 1) of the system 1, so that transaction T(2, 1) waits for transaction T(1, 1). Accordingly, the lock manager (LM) 12 of the system 2 requests the deadlock detector (DD) 15 to register the graph$\text{T(2, 1) → T(1, 1).}$ At that time, the deadlock situation is actually caused. However, this deadlock cannot be detected directly due to the loss of the message. Accordingly, the deadlock is continued.
(18) After a predetermined time, the watchdog timer (WT) 13 of the system 1 is operated to make a retry notification to the deadlock detector (DD) 15 of the system 1.
(19) The deadlock detector (DD) 15 of the system 1 then notifies the transaction manager (TM) 10 of the retry of transaction T(1, 1).
(20) According to the retry notification, the transaction manager (TM) 10 of the system 1 makes a request to the resource manager (RM) 11 to gain the resource B.
(21) The resource manager (RM) 11 of the system 1 again makes a request to gain a lock on the resource B to the lock manager (LM) 12.
(22) However, the resource B has already been locked by transaction T(2, 1) of the system 2, so that transaction T(1, 1) waits for transaction T(2, 1). Accordingly, the lock manager (LM) 12 of the system 1 again requests the deadlock detector (DD) 15 to register the graph$\text{T(1, 1) → T(2, 1).}$
(23) In response to this request, the deadlock detector (DD) 15 of the system 1 registers the graph in the wait-for-graph table T3 of the system 1. At the same time, the deadlock detector (DD) 15 of the system 1 again sends the graph$\text{T(1, 1) → T(2, 1)}$ to the system 2.
(24) The deadlock detector (DD) 15 of the system 2 receives the graph$\text{T(1, 1) → T(2, 1)}$ and registers it in the wait-for-graph table T3 of the system 2. As a result, the loss of the original graph can be made up.
(25) The deadlock detector (DD) 15 of the system 2 detects the loop and notifies the transaction manager (TM) 10 of the system 2 of the presence of the deadlock.

As mentioned above, according to this embodiment, the lock manager (LM) 12 for managing a lock situation on a resource by a task (transaction) is separated from the deadlock detector (DD) 15 and they can be operated in an asynchronous manner with each other. Accordingly, when a new task (transaction) is generated which requests a resource, it is allowed to be operated without passing through the deadlock detector (DD) if the lock can be obtained without waiting. This contributes to the smooth and effective operation of the system, increasing the processing speed. In addition, even when the lock cannot be obtained, the effect thereof is less significant because the registration of the lock situation (graph) and the detection of the deadlock are made in asynchronism with lock requests.

The effect of performing deadlock detection in such a system can therefore be reduced.

When the present invention is applied to a distributed system, a system need establish communication with another system for detecting deadlock only when it comes under the waiting relation with that other system. Accordingly, external communication is not established by a system for deadlock detection when the deadlocked transactions are confined to its own system. Even when more than one system is involved in the deadlock, the deadlock can often be detected with one communication because 90% or more of deadlocks are caused between two systems. Accordingly, it is possible to reduce the overhead time required for communication required to detect the deadlocks, allowing a more effective operation of the system.

In addition, in an embodiment in which a waiting time monitoring unit (WT) 13 is provided, the watchdog timer (WT) 13 can afford another chance of detecting deadlock even if a message is delayed or lost during communication of the message in the distributed system. Thus, deadlocks can be detected more positively.

The invention being thus described, it will be obvious that the same may be varied in many ways. The present invention encompasses all such variations that fall within the terms of the appended claims.

## Claims

1. A processing system, in which a plurality of tasks (100; 200) use a set of common resources (101; 201; 20), comprising:
task managing means (102; 202; 10) for managing execution of the tasks so as to permit parallel execution of two or more of the said tasks;
lock managing means (103; 203; 12) for managing which resource is locked by which task, and operable, when a first one of the tasks makes a request for a resource which is already locked by a second one of the tasks, to generate a waiting relation indication indicating that the first task is waiting for the second task;
registering means (105; 205) for registering such a generated waiting relation indication; and
deadlock detecting means (104; 204; 15) operable, based on such waiting relation indications registered in said registering means, to detect a deadlock condition in which, for a group of tasks made up of at least two tasks of the said plurality, each task of the group is awaiting such a resource locked by another one of the tasks of the group and is unable to carry out further processing;
characterised in that the said deadlock detecting means is operable to perform a deadlock detecting operation, for detecting such a deadlock condition, independently of the task managing means and of the lock managing means, and is also operable, in the event that a waiting relation indication is generated by the processing system during such an operation, to hold back registration of that indication pending completion of the operation.

2. A processing system, for use in distributed multitasking apparatus in which a plurality of such processing systems are distributed and in which a plurality of tasks (100; 200) use a set of common resources (101; 201; 20), which processing system comprises:
task managing (102; 202; 10) means for managing execution of the tasks so as to permit parallel execution of two or more of the said tasks;
lock managing means (103; 203; 12) for managing which resource is locked by which task, and operable, when a first one of the tasks makes a request for a resource which is already locked by a second one of the tasks, to generate a waiting relation indication indicating that the first task is waiting for the second task;
communication means (104; 204; 15) operable, when the said first task is being performed in the claimed processing system and the said second task is being performed in another processing system of the apparatus, to communicate the said waiting relation indication to that other processing system;
registering means (105; 205) for registering such waiting relation indications generated by said lock managing means or received from another processing system of the apparatus; and
deadlock detecting means (104; 204; 15) operable, based on such waiting relation indications registered in said registering means, to detect a deadlock condition in which, for a group of tasks made up of at least two tasks of the said plurality, each task of the group is awaiting such a resource locked by another one of the tasks of the group and is unable to carry out further processing;
characterised by waiting time monitoring means (206; 13) operable to detect when such a registered waiting relation indication persists for a predetermined time; and
retry notification means (206; 204; 13; 15) operable, when such a persisting waiting relation indication is detected, to cause a retry notification to be applied to the task whose said request caused the persisting waiting relation indication to be generated, which notification serves to notify that task that it should make that request again, such that the waiting relation indication concerned can be communicated again to the said other processing system.

3. A system as claimed in claim 1 or 2, wherein said registering means includes a table (105; 205) in which such a generated waiting relation indication is registered.

4. A processing system as claimed in claim 3 when read as appended to claim 1, for use in distributed multitasking apparatus in which a plurality of such processing systems are distributed, wherein, when such a waiting relation indication is generated for which the said first and second tasks are both being executed by the claimed processing system, the waiting relation indication concerned is registered exclusively in the said table of the registering means of the claimed processing system.

5. A processing system as claimed in claim 3 when read as appended to claim 2, wherein, when such a waiting relation indication is generated for which the said first and second tasks are both being executed by the claimed processing system, the waiting relation indication concerned is registered exclusively in the said table of the registering means of the claimed processing system.

6. A processing system as claimed in claim 4 or 5, wherein, when such a waiting relation indication is generated for which the said first task is being executed by the claimed processing system and the said second task is being executed by another one of the processing systems of the apparatus, the claimed processing system is operable to communicate the waiting relation indication concerned to that other processing system for registration in the registeringmeans table of that system, thereby to enable that other system to detect presence or absence of such a deadlock condition.

7. A processing system as claimed in claim 4, 5 or 6, wherein, when such a waiting relation indication is generated for which the said second task is being executed by the claimed processing system and the said first task is being executed by another one of the processing systems of the apparatus, the claimed processing system is operable to receive the waiting relation indication concerned from that other processing system and to register it in its said registering-means table and to detect the presence or absence of such a deadlock condition by means of searching that table.

8. A system as claimed in any one of claims 3 to 7, wherein said deadlock detecting means is operable, following generation of such a waiting relation indication, to cause the waiting relation indication to be registered in said table and to detect the presence or absence of the said deadlock condition by means of searching said table.

9. A system as claimed in any one of claims 3 to 8, wherein said lock managing means causes the waiting relation indication to be registered in said table and issues a deadlock detecting instruction to the deadlock detecting means only when the waiting relation indication is caused by a resource gaining request, and wherein said lock managing means does not suspend execution of the task for a resource gaining request which does not result in a waiting relation indication being generated.

10. A system as claimed in any one of claims 3 to 9, wherein the registration of the waiting relation indication is deleted from said table when it is detected that, for the indication concerned, the said first task is no longer in a waiting relationship with the second task.

11. A system as claimed in any preceding claim, wherein said deadlock detecting means comprises a request queue receiving unit (14) for receiving a waiting-relation-indication registering request indicative of an instruction to detect the deadlock condition.

12. A system as claimed in any preceding claim, wherein the waiting relation indication indicates that the first task is waiting for release of the resource locked by the second task.

13. A system as claimed in any one of claims 1 to 11, wherein the waiting relation indication indicates that the first task is waiting for termination of the second task which is locking the resource requested by the first task.

14. A system as claimed in any preceding claim, wherein said task managing means manages the tasks through a two-phase lock system in which the lock is continuously made when a certain processing starts to lock a data while the lock is continuously released when it starts to release the lock.

15. A system as claimed in any preceding claim, further including a lock table for registering a relationship between a task and a resource locked by the task.

16. A system as claimed in claim 1, for use in distributed multitasking apparatus in which a plurality of such processing systems are distributed, further comprising:
communication means (104; 204; 15) operable, when the said first task is being performed in the claimed processing system and the said second task is being performed in another processing system of the apparatus, to communicate the said waiting relation indication to that other processing system, and the said registering means is further operable to register such waiting relation indications received from such communication means of another processing system of the apparatus;
waiting time monitoring means (206; 13) operable to detect when such a registered waiting relation indication persists for a predetermined time; and
retry notification means (206; 204; 13; 15) operable, when such a persisting waiting relation indication is detected, to cause a retry notification to be applied to the task whose said request caused the persisting waiting relation indication to be generated, which notification serves to notify that task that it should make that request again, such that the waiting relation indication concerned can be communicated again to the said other processing system.

17. Distributed multitasking apparatus in which a plurality of processing systems are distributed, each being a processing system as claimed in any preceding claim.

18. Apparatus as claimed in claim 17, wherein each processing system is a processing system as claimed in any one of claims 3 to 10, or in any one of claims 11 to 16 when read as appended to claim 3, and wherein, when such a waiting relation indication is generated by a first one (SYSTEM i) of the processing systems, for which indication the said first task is being executed by that first system (SYSTEM i) and the said second task is being executed by a second one (SYSTEM j) of the processing systems of the apparatus, the waiting relation indication is registered in the registering-means table of the first (SYSTEM i), and, for each of the first and second systems, the deadlock detecting means in the system concerned is operable, when one of the tasks being executed by the system concerned (e.g. SYSTEM i) is waiting for one of the tasks being executed by the other (SYSTEM j) of the first and second systems, to communicate with that other system (SYSTEM j) so as to cause such waiting relation indications registered in the registering-means table of the other system (SYSTEM j) to be transmitted to its own system and to cause the deadlock detecting means in its own system (SYSTEM i) to employ such transmitted indications from that other system (SYSTEM j) and the indication registered in the registering-means table of its own system so as to enable those deadlock detecting means to determine the presence or absence of the deadlock condition.

19. Apparatus as claimed in claim 17 or 18, wherein a task x being executed in processing system i is defined as T(i, x) and a task y being executed in another processing system j is defined as T(j, y) and in the registering-means table the waiting relation indication indicating that the task T(i, x) is waiting for the task T(j, y) is registered in the form T(i, x) → T(j, y) and the waiting relation indication indicating that the task T(j, y) is waiting for the task T(i, x) is registered in the form T(j, y) → T(i, x), and when both of these waiting relation indications are registered in the table a loop T(i, x) → T(j, y) → T(i, x) is detected, whereupon the said deadlock condition is detected.

20. A processing method, for use in a processing system in which a plurality of tasks use a set of common resources, comprising steps of:
managing execution of the tasks so as to permit parallel execution of two or more of the said tasks;
managing which resource is locked by which task, and, when a first one of the tasks makes a request for a resource which is already locked by a second one of the tasks, generating a waiting relation indication indicating that the first task is waiting for the second task;
registering such a generated waiting relation indication; and
detecting, based on such registered waiting relation indications, a deadlock condition in which, for a group of tasks made up of at least two tasks of the said plurality, each task of the group is awaiting such a resource locked by another one of the tasks of the group and is unable to carry out further processing;
characterised in that a deadlock detection operation, for detecting such a deadlock condition, is performed independently of the task management and lock management, and, in the event that a waiting relation is generated during such an operation, registration of that indication is held back pending completion of the operation.

21. A processing method, for use in distributed multitasking apparatus in which a plurality of processing systems are distributed and in which a plurality of tasks use a set of common resources, which processing method comprises steps of:
managing execution of the tasks so as to permit parallel execution of two or more of the said tasks;
managing which resource is locked by which task, and, when a first one of the tasks makes a request for a resource which is already locked by a second one of the tasks, generating a waiting relation indication indicating that the first task is waiting for the second task;
when the said first task is being performed in a first one of the processing systems and the said second task is being performed in a second one of the processing system of the apparatus, communicating the said waiting relation indication from the first to the second processing system;
registering such waiting relation indications generated or received from another processing system of the apparatus; and
detecting, based on such registered waiting relation indications, a deadlock condition in which, for a group of tasks made up of at least two tasks of the said plurality, each task of the group is awaiting such a resource locked by another one of the tasks of the group and is unable to carry out further processing;
characterised by detecting, in the said first processing system, when such a registered waiting relation indication persists for a predetermined time, and, when such a persisting waiting relation indication is detected, applying a retry notification to the task whose said request caused the persisting waiting relation indication to be generated, which notification serves to notify that task that it should make that request again, such that the waiting relation indication concerned can be communicated again to the said second processing system.

## Patentansprüche

1. Verarbeitungssystem, in welchem eine Mehrzahl von Aufgaben (100; 200) einen Satz gemeinsamer Ressourcen (101; 201; 20) verwendet, mit:
einem Aufgabenverwaltungsmittel (102; 202; 10) zum Verwalten einer Ausführung der Aufgaben, um eine parallele Ausführung von zwei oder mehr der Aufgaben zu gestatten;
einem Verriegelungsverwaltungsmittel (103; 203; 12) zum Verwalten, welche Ressource durch weiche Aufgabe verriegelt wird, und betreibbar, wenn eine erste der Aufgaben eine Anforderung für eine Ressource macht, die durch eine zweite der Aufgaben schon verriegelt ist, um eine Wartebeziehungsangabe zu erzeugen, die angibt, daß die erste Aufgabe auf die zweite Aufgabe wartet;
einem Registriermittel (105; 205) zum Registrieren solch einer erzeugten Wartebeziehungsangabe; und
einem Systemverklemmung-Detektiermittel (104; 204; 15), das auf der Basis solcher, in dem Registriermittel registrierter Wartebeziehungsangaben betreibbar ist, um eine Systemverklemmungsbedingung zu detektieren, in der für eine Gruppe von Aufgaben, die aus mindestens zwei Aufgaben der Mehrzahl besteht, jede Aufgabe der Gruppe solch eine Ressource erwartet, die durch eine andere der Aufgaben der Gruppe verriegelt ist, und eine weitere Verarbeitung nicht ausführen kann;
dadurch gekennzeichnet, daß das Systemverklemmung-Detektiermittel betreibbar ist, um eine Systemverklemmung-Detektieroperation zum Detektieren solch einer Systemverklemmungsbedingung unabhängig von dem Aufgabenverwaltungsmittel und dem Verriegelungsverwaltungsmittel durchzuführen, und auch in den Fall betreibbar ist, daß eine Wartebeziehungsangabe durch das Verarbeitungssystem während solch einer Operation erzeugt wird, um eine Registrierung der Angabe bis zum Abschluß der Operation zurückzuhalten.

2. Verarbeitungssystem zur Verwendung in einem verteilten Multitasking-Gerät, in welchem eine Mehrzahl solcher Verarbeitungssysteme verteilt ist und in welchem eine Mehrzahl von Aufgaben (100; 200) einen Satz gemeinsamer Ressourcen (101; 201, 20) verwendet, welches Verarbeitungssystem umfaßt:
ein Aufgabenverwaltungsmittel (102; 202; 10) zum Verwalten einer Ausführung der Aufgaben, um eine parallele Ausführung von zwei oder mehr der Aufgaben zu gestatten;
ein Verriegelungsverwaltungsmittel (103; 203; 12) zum Verwalten, weiche Ressource durch welche Aufgabe verriegelt wird, und betreibbar, wenn eine erste der Aufgaben eine Anforderung für eine Ressource macht, die durch eine zweite der Aufgaben schon verriegelt ist, um eine Wartebeziehungsangabe zu erzeugen, die angibt, daß die erste Aufgabe auf die zweite Aufgabe wartet;
ein Übermittlungsmittel (104; 204; 15), das, wenn in dem beanspruchten Verarbeitungssystem die erste Aufgabe gerade durchgeführt wird und die zweite Aufgabe in einem anderen Verarbeitungssystem des Geräts gerade durchgeführt wird, betreibbar ist, um die Wartebeziehungsangabe dem anderen System mitzuteilen;
ein Registriermittel (105; 205) zum Registrieren solcher Wartebeziehungsangaben, die durch das Verriegelungsmittel erzeugt wurden oder von einem anderen Verarbeitungssystem des Geräts empfangen wurden; und
ein Systemverklemmung-Detektiermittel (104; 204; 15), das auf der Basis solcher, in dem Registriermittel registrierter Wartebeziehungsangaben betreibbar ist, um eine Systemverklemmungsbedingung zu detektieren, in der für eine Gruppe von Aufgaben, die aus mindestens zwei Aufgaben der Mehrzahl besteht, jede Aufgabe der Gruppe solch eine Ressource erwartet, die durch eine andere der Aufgaben der Gruppe verriegelt ist, und eine weitere Verarbeitung nicht ausführen kann;
gekennzeichnet durch ein Wartezeit-Überwachungsmittel (206; 13), das betreibbar ist, um zu detektieren, wenn solch eine registrierte Wartebeziehungsangabe für eine vorbestimmte Zeit fortdauert; und
ein Neuversuch-Meldungsmittel (206; 204; 13; 15), das betreibbar ist, wenn solch eine fortdauernde Wartebeziehungsangabe detektiert wird, um zu veranlassen, daß eine Neuversuch-Meldung auf die Aufgabe angewendet wird, deren Anforderung veranlaßte, daß die fortdauernde Wartebeziehungsangabe erzeugt wurde, weiche Meldung dazu dient, der Aufgabe zu melden, daß sie die Anforderung wieder machen soll, so daß die betreffende Wartebeziehungsangabe dem anderen Verarbeitungssystem wieder mitgeteilt werden kann.

3. System nach Anspruch 1 oder 2, worin das Registriermittel eine Tabelle (105; 205) enthält, in der solch eine erzeugte Wartebeziehungsangabe registriert ist.

4. Verarbeitungssystem nach Anspruch 3, wenn als an Anspruch 1 angefügt gelesen, zur Verwendung in einem verteilten Multitasking-Gerät, in welchem eine Mehrzahl solcher Verarbeitungssysteme verteilt ist, worin, wenn solch eine Wartebeziehungsangabe erzeugt wird, für welche die ersten und zweiten Aufgaben beide durch das beanspruchte Verarbeitungesystem gerade ausgeführt werden, die betreffende Wartebeziehungsangabe exklusiv in der Tabelle des Registriermittels des beanspruchten Verarbeitungssystems registriert wird.

5. Verarbeitungssystem nach Anspruch 3, wenn als an Anspruch 2 angefügt gelesen, worin, wenn solch eine Wartebeziehungsangabe erzeugt wird, für welche die ersten und zweiten Aufgaben beide gerade durch das beanspruchte Verarbeitungssystem ausgeführt werden, die betreffende Wartebeziehungsangabe exklusiv in der Tabelle des Registriermittels des beanspruchten Verarbeitungssystems registriert wird.

6. Verarbeitungssystem nach Anspruch 4 oder 5, worin, wenn solch eine Wartebeziehungsangabe erzeugt ist, für welche die erste Aufgabe durch das beanspruchte Verarbeitungssystem gerade ausgeführt wird und die zweite Aufgabe durch ein anderes der Verarbeitungssysteme des Geräts gerade ausgeführt wird, das beanspruchte Verarbeitungssystem betreibbar ist, um die betreffende Wartebeziehungsangabe dem anderen Verarbeitungssystem für eine Registrierung in der Registriermittel-Tabelle des Systems mitzuteilen, um dadurch zu ermöglichen, daß ein anderes System ein Vorhandensein oder Nichtvorhandensein solch einer Systemverklemmungsbedingung detektiert.

7. Verarbeitungssystem nach Anspruch 4, 5 oder 6, worin, wenn solch eine Wartebeziehungsangabe erzeugt wird, für welche die zweite Aufgabe durch das beanspruchte Verarbeitungssystem gerade ausgeführt wird und die erste Aufgabe durch ein anderes der Verarbeitungssysteme des Geräts gerade ausgeführt wird, das beanspruchte Verarbeitungssystem betreibbar ist, um von dem anderen Verarbeitungssystem die betreffende Wartebeziehungsangabe zu empfangen und sie in seiner Registriermittel-Tabelle zu registrieren und das Vorhandensein oder Nichtvorhandensein solch einer Systemverklemmungsbedingung mittels Durchsuchen der Tabelle zu detektieren.

8. System nach einem der Ansprüche 3 bis 7, worin das Systemverklemmung-Detektiermittel nach Erzeugung solch einer Wartebeziehungsangabe betreibbar ist, um zu veranlassen, daß die Wartebeziehungsangabe in der Tabelle registriert wird, und das Vorhandensein oder Nichtvorhandensein der Systemverklemmungsbedingung mittels Durchsuchen der Tabelle zu detektieren.

9. System nach einem der Ansprüche 3 bis 8, worin das Verriegelungsverwaltungsmittel veranlaßt, daß die Wartebeziehungsangabe in der Tabelle registriert wird, und eine Systemverklemmung-Detektieranweisung an das Systemverklemmung-Detektiermittel nur ausgibt, wenn die Wartebeziehungsangabe durch eine Ressource-Gewinnen-Anforderung veranlaßt wird, und worin das Verriegelungsverwaltungsmittel eine Ausführung der Aufgabe für eine Ressource-Gewinnen-Anforderung nicht suspendiert, was nicht zur Folge hat, daß eine Wartebeziehungsangabe erzeugt wird.

10. System nach einem der Ansprüche 3 bis 9, worin die Registrierung der Wartebeziehungsangabe aus der Tabelle gelöscht wird, wenn detektiert wird, daß für die betreffende Angabe die erste Aufgabe nicht länger in einer Wartebeziehung mit der zweiten Aufgabe steht.

11. System nach einem der vorhergehenden Ansprüche, worin das Systemverklemmung-Detektiermittel eine Anforderungswarteschlange-Empfangseinheit (14) zum Empfangen einer Anforderung zum Registrieren einer Wartebeziehungsangabe aufweist, die eine Anweisung angibt, um die Systemverklemmungsbedingung zu detektieren.

12. System nach einem der vorhergehenden Ansprüche, worin die Wartebeziehungsangabe angibt, daß die erste Aufgabe auf eine Freigabe der durch die zweite Aufgabe verriegelten Ressource wartet.

13. System nach einem der Ansprüche 1 bis 11, worin die Wartebeziehungsangabe angibt, daß die erste Aufgabe auf eine Beendigung der zweiten Aufgabe wartet, die die durch die erste Aufgabe angeforderte Ressource verriegelt.

14. System nach einem der vorhergehenden Ansprüche, worin das Aufgabenverwaltungsmittel die Aufgaben durch ein Zweiphasen-Verriegelungssystem verwaltet, in welchem die Verriegelung kontinuierlich hergestellt ist, wenn eine bestimmte Verarbeitung beginnt, Daten zu verriegeln, während die Verriegelung kontinuierlich freigegeben ist, wenn sie beginnt, die Verriegelung freizugeben.

15. System nach einem der vorhergehenden Ansprüche, ferner einschließend eine Verriegelungstabelle zum Registrieren einer Beziehung zwischen einer Aufgabe und einer durch die Aufgabe verriegelten Ressource.

16. System nach Anspruch 1, zur Verwendung in einem verteilten Multitasking-Gerät, in welchem eine Mehrzahl solcher Verarbeitungssysteme verteilt ist, ferner mit:
einem Übermittlungsmittel (104; 204; 15), das, wenn die erste Aufgabe in dem beanspruchten Verarbeitungssystem gerade ausgeführt wird und die zweite Aufgabe in einem anderen Verarbeitungssystem des Geräts gerade ausgeführt wird, betreibbar ist, um die Wartebeziehungsangabe dem anderen Verarbeitungssystem mitzuteilen, und das Registriermittel ferner betreibbar ist, um solche Wartebeziehungsangaben zu registrieren, die von solch einem Übermittlungsmittel eines anderen Verarbeitungssystems des Geräts empfangen wurden;
einem Wartezeit-Überwachungsmittel (206; 13), das betreibbar ist, um zu detektieren, wenn solch eine registrierte Wartebeziehungsangabe für eine vorbestimmte Zeit fortdauert; und
einem Neuversuch-Meldung-Mittel (206; 204; 13; 15), das, wenn solch eine fortdauernde Wartebeziehungsangabe detektiert wird, betreibbar ist, um zu veranlassen, daß eine NeuversuchMeldung auf die Aufgabe angewendet wird, deren Anforderung veranlaßte, daß die fortdauernde Wartebeziehungsangabe erzeugt wurde, welche Meldung dazu dient, der Aufgabe zu melden, daß sie die Anforderung wieder machen soll, so daß die betreffende Wartebeziehungsangabe dem anderen Verarbeitungssystem wieder mitgeteilt werden kann.

17. Verteiltes Multitasking-Gerät, in welchem eine Mehrzahl von Verarbeitungssystemen verteilt ist, jedes ein Verarbeitungssystem nach einem der vorhergehenden Ansprüche seiend.

18. Gerät nach Anspruch 17, worin jedes Verarbeitungssystem ein Verarbeitungssystem nach einem der Ansprüche 3 bis 10 oder einem der Ansprüche 11 bis 16 ist, wenn als an Anspruch 3 angefügt gelesen, und worin, wenn durch ein erstes (SYSTEM i) der Verarbeitungssysteme solch eine Wartebeziehungsangabe erzeugt wird, für weiche Angabe die erste Aufgabe durch das erste System (SYSTEM i) gerade ausgeführt wird und die zweite Aufgabe durch ein zweites (SYSTEM j) der Verarbeitungssysteme des Geräts gerade ausgeführt wird, die Wartebeziehungsangabe in der Registriermittel-Tabelle des ersten (SYSTEM i) registriert wird, und für jedes der ersten und zweiten Systeme das Systemverklemmung-Detektiermittel in dem betreffenden System, wenn eine der Aufgaben, die durch das betreffende System (z.B. SYSTEM i) gerade ausgeführt wird, auf eine der Aufgaben wartet, die durch das andere System (SYSTEM j) der ersten und zweiten Systeme gerade ausgeführt wird, betreibbar ist, um mit dem anderen System (SYSTEM j) zu kommunizieren, um zu veranlassen, daß solche, in der Registriermittel-Tabelle des anderen Systems (SYSTEM j) registrierte Wartebeziehungsangaben zu seinem eigenen System übertragen werden, und um das Systemverklemmung-Detektiermittel in seinem eigenen System (SYSTEM i) zu veranlassen, solche übertragenen Angaben von dem anderen System (SYSTEM j) und die in der Registriermittel-Tabelle seines eigenen Systems registrierte Angabe zu verwenden, um dem Systemverklemmung-Detektiermittel zu ermöglichen, das Vorhandensein oder Nichtvorhandensein der Systemverklemmungsbedingung zu bestimmen.

19. Gerät nach Anspruch 17 oder 18, worin eine in einem Verarbeitungssystem i gerade ausgeführte Aufgabe x als T(i, x) definiert ist und eine in einem anderen Verarbeitungssystem j gerade ausgeführte Aufgabe y als T(j, y) definiert ist und in der Registriermittel-Tabelle die Wartebeziehungsangabe, die angibt, daß die Aufgabe T(i, x) auf die Aufgabe T(j, y) wartet, in der Form T(i, x) -> T(j, y) registriert ist und die Wartebeziehungsangabe, die angibt, daß die Aufgabe T(j, y) auf die Aufgabe T(i, x) wartet, in der Form T(j, y) -> T(i, x) registriert ist, und, wenn diese beiden Wartebeziehungsangaben in der Tabelle registriert sind, eine Schleife T(i, x) -> T(j, y) -> T(i, x) detektiert wird, woraufhin die Systemverklemmungsbedingung detektiert ist.

20. Verarbeitungsverfahren zur Verwendung in einem Verarbeitungssystem, in welchem eine Mehrzahl von Aufgaben einen Satz gemeinsamer Ressourcen verwendet, mit den Schritten:
Verwalten einer Ausführung der Aufgaben, um so eine parallele Ausführung von zwei oder mehr der Aufgaben zu gestatten;
Verwalten, welche Ressource durch welche Aufgabe verriegelt wird, und, wenn eine erste der Aufgaben eine Anforderung für eine Ressource macht, die durch eine zweite der Aufgaben schon verriegelt ist, Erzeugen einer Wartebeziehungsangabe, die angibt, daß die erste Aufgabe auf die zweite Aufgabe wartet;
Registrieren solch einer erzeugten Wartebeziehungsangabe; und
Detektieren, basierend auf solchen registrierten Wartebeziehungsangaben, einer Systemverklemmungsbedingung, in welcher für eine Gruppe von Aufgaben, die aus mindestens zwei Aufgaben der Mehrzahl besteht, jede Aufgabe der Gruppe solch eine Ressource erwartet, die durch eine andere den Aufgaben der Gruppe verriegelt ist, und eine weitere Verarbeitung nicht ausführen kann;
dadurch gekennzeichnet, daß eine Systemverklemmungsoperation zum Detektieren solch einer Systemverklemmungsbedingung unabhängig von der Aufgabenverwaltung und Verriegelungsverwaltung durchgeführt wird, und in dem Fall, daß eine Wartebeziehungsangabe während solch einer Operation erzeugt wird, eine Registrierung der Angabe bis zum Abschluß der Operation zurückgehalten wird.

21. Verarbeitungsverfahren zur Verwendung in einem verteilten Multitasking-Gerät, in welchem eine Mehrzahl von Verarbeitungssystemen verteilt ist und in welchem eine Mehrzahl von Aufgaben einen Satz gemeinsamer Ressourcen verwendet, welches Verarbeitungsverfahren die Schritte umfaßt:
Verwalten einer Ausführung der Aufgaben, um so eine parallele Ausführung von zwei oder mehr der Aufgaben zu gestatten;
Verwalten, welche Ressource durch welche Aufgabe verriegelt ist, und, wenn eine erste der Aufgaben eine Anforderung für eine Ressource macht, die durch eine zweite der Aufgaben schon verriegelt ist, Erzeugen einer Wartebeziehungsangabe, die angibt, daß die erste Aufgabe auf die zweite Aufgabe wartet;
wenn die erste Aufgabe in einem ersten der Verarbeitungssysteme gerade durchgeführt wird und die zweite Aufgabe in einem zweiten der Verarbeitungssysteme des Geräts gerade ausgeführt wird, Übermitteln der Wartebeziehungsangabe von dem ersten zu dem zweiten Verarbeitungssystem;
Registrieren solcher Wartebeziehungsangaben, die erzeugt oder von einem anderen Verarbeitungssystem des Geräts empfangen wurden; und
Detektieren, auf der Grundlage solcher registrierter Wartebeziehungsangaben, einer Systemverklemmungsbedingung, in der für eine Gruppe von Aufgaben, die aus mindestens zwei Aufgaben der Mehrzahl besteht, jede Aufgabe der Gruppe solch eine Ressource erwartet, die durch eine andere der Aufgaben der Gruppe verriegelt ist, und eine weitere Verarbeitung nicht ausführen kann;
gekennzeichnet durch Detektieren, im ersten Verarbeitungssystem, wenn solch eine registrierte Wartebeziehungsangabe für eine vorbestimmte Zeit fortdauert, und, wenn solch eine fortdauernde Wartebeziehungsangabe detektiert wird, Anwenden einer Neuversuch-Meldung auf die Aufgabe, deren Anforderung bewirkte, daß die fortdauernde Wartebeziehungsangabe erzeugt wurde, welche Meldung dazu dient, der Aufgabe zu melden, daß sie die Anforderung wieder machen soll, so daß die betreffende Wartebeziehungsangabe dem zweiten Verarbeitungssystem wieder mitgeteilt werden kann.

## Revendications

1. Système de traitement, dans lequel une pluralité de tâches (100; 200) utilisent un ensemble de ressources communes (101 ; 201 ; 20), comprenant:
un moyen de gestion de tâches (102; 202; 10) servant à gérer l'exécution des tâches de façon à permettre l'exécution en parallèle de deux ou plus de deux desdites tâches;
un moyen de gestion d'occupations (103 ; 203; 12) servant à gérer les occupations respectives des ressources par les tâches, et ayant pour fonction, lorsqu'une première des tâches fait une demande pour une ressource qui est déjà occupée par une deuxième des tâches, de produire une indication de relation d'attente indiquant que la première tâche est en train d'attendre la deuxième tâche;
un moyen d'enregistrement (105; 205) servant à enregistrer l'indication de relation d'attente ainsi produite ; et
un moyen de détection d'interblocage, ou impasse, (104; 204; 15) ayant pour fonction, sur la base de telles indications de relation d'attente enregistrées dans ledit moyen d'enregistrement, de détecter un état d'interblocage dans lequel, pour un groupe de tâches constitué d'au moins deux tâches de ladite pluralité, chaque tâche du groupe attend une ressource occupée par une autre des tâches du groupe et n'est pas en mesure d'effectuer la poursuite du traitement;
caractérisé en ce que ledit moyen de détection d'interblocage a pour fonction d'effectuer une opération de détection d'interblocage, permettant de détecter un tel état d'interblocage, indépendamment du moyen de gestion de tâches et du moyen de gestion d'occupations, et a également pour fonction, dans le cas où une indication de relation d'attente est produite par le système de traitement pendant une telle opération, de retenir l'enregistrement de ces indications en attendant l'achèvement de l'opération.

2. Système de traitement, destiné à être utilisé dans un appareil de traitement multitâche réparti dans lequel une pluralité de semblables systèmes de traitement sont répartis et dans lequel une pluralité de tâches (100; 200) utilisent un ensemble de ressources communes (101; 201; 20), lequel système de traitement comprend:
un moyen de gestion de tâches (102; 202; 10) servant à gérer l'exécution des tâches de façon à permettre l'exécution en parallèle de deux ou plus de deux desdites tâches;
un moyen de gestion d'occupations (103 ; 203; 12) servant à gérer les occupations respectives des ressources par les tâches, et ayant pour fonction, lorsqu'une première des tâches fait une demande pour une ressource qui est déjà occupée par une deuxième des tâches, de produire une indication de relation d'attente indiquant que la première tâche est en train d'attendre la deuxième tâche;
un moyen de communication (104; 204; 15) ayant pour fonction, lorsque ladite première tâche est en train d'être effectuée dans le système de traitement revendiqué et que ladite deuxième tâche est en train d'être effectuée dans un autre système de traitement de l'appareil, de communiquer ladite indication de relation d'attente à cet autre système de traitement;
un moyen d'enregistrement (105; 205) servant à enregistrer ces indications de relations d'attente produites par ledit moyen de gestion d'occupations ou reçues de la part d'un autre système de traitement de l'appareil; et
un moyen de détection d'interblocage, ou impasse, (104; 204; 15) ayant pour fonction, sur la base de telles indications de relation d'attente enregistrées dans ledit moyen d'enregistrement, de détecter un état d'interblocage dans lequel, pour un groupe de tâches constitué d'au moins deux tâches de ladite pluralité, chaque tâche du groupe attend une ressource occupée par une autre des tâches du groupe et n'est pas en mesure d'effectuer la poursuite du traitement;
caractérisé par un moyen de contrôle de temps d'attente (206; 13) ayant pour fonction de détecter lorsqu'une telle indication de relation d'attente enregistrée persiste pendant une durée prédéterminée ; et
un moyen de notification de nouvelle tentative (206; 204; 13; 15) ayant pour fonction, lorsqu'une telle indication de relation d'attente persistante a été détectée, d'amener l'application d'une notification de nouvelle tentative à la tâche dont ladite demande a provoqué la production de l'indication de relation d'attente persistante, laquelle notification sert à notifier à cette tâche qu'elle doit de nouveau effectuer cette demande, de façon que l'indication de relation d'attente considérée puisse être communiquée de nouveau audit autre système de traitement.

3. Système selon la revendication 1 ou 2, où ledit moyen d'enregistrement comporte une table (105; 205) dans laquelle une indication de relation d'attente ainsi produite est enregistrée.

4. Système de traitement selon la revendication 3 lorsque celle-ci est prise en référence avec la revendication 1, destiné à être utilisé dans un appareil de traitement multitâche réparti dans lequel une pluralité de semblables systèmes de traitement sont répartis, où, lorsqu'une telle indication de relation d'attente est produite, relativement à laquelle lesdites première et deuxième tâches sont toutes deux en train d'être exécutées par le système de traitement revendiqué, l'indication de relation d'attente considéré est enregistrée exclusivement dans ladite table du moyen d'enregistrement du système de traitement revendiqué.

5. Système de traitement selon la revendication 3, lorsque celle-ci est prise en référence avec la revendication 2, où, lorsqu'une telle indication de relation d'attente est produite, relativement à laquelle lesdites première et deuxième tâches sont toutes deux en train d'être exécutées par le système de traitement revendiqué, l'indication de relation d'attente considérée est enregistrée exclusivement dans ladite table du moyen d'enregistrement du système de traitement revendiqué.

6. Système de traitement selon la revendication 4 ou 5, où, lorsqu'une telle indication de relation d'attente est produite, relativement à laquelle ladite première tâche est en train d'être exécutée par le système de traitement revendiqué et ladite deuxième tâche est en train d'être exécutée par un autre des systèmes de traitement de l'appareil, le système de traitement revendiqué a pour fonction de communiquer l'indication de relation d'attente considérée à cet autre système de traitement en vue de son enregistrement dans la table du moyen d'enregistrement dans ce système, ce qui autorise cet autre système a détecter la présence ou l'absence d'un tel état d'interblocage.

7. Système de traitement selon la revendication 4, 5 ou 6, où, lorsqu'une telle indication de relation d'attente est produite, relativement à laquelle ladite deuxième tâche est en train d'être exécutée par le système de traitement revendiqué et ladite première tâche est en train d'être exécutée par un autre des systèmes de traitement de l'appareil, le système de traitement revendiqué a pour fonction de recevoir l'indication de relation d'attente considérée de la part de cet autre système de traitement et de l'enregistrer dans la table de son dit moyen d'enregistrement, pour ainsi détecter la présence ou l'absence d'un tel état d'interblocage par le moyen d'une recherche dans cette table.

8. Système selon l'une quelconque des revendications 3 à 7, où ledit moyen de détection d'interblocage a pour fonction, suite à la production de cette indication de relation d'attente, de provoquer l'enregistrement de l'indication de relation d'attente dans ladite table et de détecter la présence ou l'absence dudit état d'interblocage par le moyen d'une recherche effectuée dans ladite table.

9. Système selon l'une quelconque des revendications 3 à 8, où ledit moyen de gestion d'occupations provoque l'enregistrement de l'indication de relation d'attente dans ladite table et ne délivre une instruction de détection d'interblocage au moyen de détection d'interblocage que lorsque l'indication de relation d'attente est provoquée par une demande visant à acquérir une ressource, et où ledit moyen de gestion d'occupations ne suspend pas l'exécution de la tâche pendant une demande d'acquisition de ressource qui ne résulte pas en la production d'une indication de relation d'attente.

10. Système selon l'une quelconque des revendications 3 à 9, où l'enregistrement de l'indication de relation d'attente est supprimé de ladite table lorsqu'il a été détecté que, pour l'indication considérée, ladite première tâche n'est plus dans une relation d'attente avec la deuxième tâche.

11. Système selon l'une quelconque des revendications précédentes, où ledit moyen de détection d'interblocage comprend une unité (14) de réception de fil d'attente de demandes servant à recevoir une demande d'enregistrement d'indication de relation d'attente indicative d'une instruction visant à détecter l'état d'interblocage.

12. Système selon l'une quelconque des revendications précédentes, où l'indication de relation d'attente indique que la première tâche est en train d'attendre la libération de la ressource occupée par la deuxième tâche.

13. Système selon l'une quelconque des revendications 1 à 11, où l'indication de relation d'attente indique que la première tâche est en train d'attendre la terminaison de la deuxième tâche qui occupe la ressource demandée par la première tâche.

14. Système selon l'une quelconque des revendications précédentes, où ledit moyen de gestion de tâches gère les tâches via un système d'occupation à deux phases dans lequel l'occupation est réalisée de manière continue lorsqu'un certain traitement commence d'occuper une donnée, tandis que l'occupation est libérée de façon continue lorsqu'il commence de cesser l'occupation.

15. Système selon l'une quelconque des revendications précédentes, comportant en outre une table d'occupations servant à enregistrer une relation entre une tâche et une ressource occupée par cette tâche.

16. Système selon la revendication 1, destiné à être utilisé dans un appareil de traitement multitâche réparti dans lequel une pluralité de semblables systèmes de traitement sont répartis, comprenant en outre:
un moyen de communication (104; 204; 15) ayant pour fonction, lorsque ladite première tâche est en train d'être effectuée dans le système de traitement revendiqué et que ladite deuxième tâche est en train d'être effectuée dans un autre système de traitement de l'appareil, de communiquer ladite indication de relation d'attente à cet autre système de traitement, et ledit moyen d'enregistrement a en outre pour fonction d'enregistrer de telles indications de relation d'attente reçues de la part de ce moyen de communication d'un autre système de traitement de l'appareil;
un moyen de contrôle de temps d'attente (206; 13) ayant pour fonction de détecter le moment où une telle indication de relation d'attente enregistrée persiste pendant une durée prédéterminée ; et
un moyen de notification de nouvelle tentative (206; 204; 13; 15) ayant pour fonction, lorsqu'une telle indication de relation d'attente persistante a été détectée, d'amener l'application d'une notification de nouvelle tentative à la tâche dont ladite demande a provoqué la production de l'indication de relation d'attente persistante, laquelle notification sert à notifier à cette tâche qu'elle doit de nouveau effectuer cette demande, de façon que l'indication de relation d'attente considérée puisse être communiquée de nouveau audit autre système de traitement.

17. Appareil de traitement multitâche réparti dans lequel une pluralité de systèmes de traitement sont répartis, chacun étant un système de traitement tel que défini dans l'une quelconque des revendications précédentes.

18. Appareil selon la revendication 17, où chaque système de traitement est un système de traitement tel que défini dans l'une quelconque des revendications 3 à 10, ou bien dans l'une quelconque des revendications 11 à 16 lorsque celle-ci est prise en référence avec la revendication 3, et où, lorsqu'une semblable indication de relation d'attente est produite par un premier (SYSTEME i) des systèmes de traitement, pour laquelle indication ladite première tâche est en train d'être exécutée par ce premier système (SYSTEME i) et ladite deuxième tâche est en train d'être exécutée par un deuxième (SYSTEME j) des systèmes de traitement de l'appareil, l'indication de relation d'attente est enregistré dans la table du moyen d'enregistrement du premier système (SYSTEME i), et, pour chacun des premier et deuxième systèmes, le moyen de détection d'interblocage du système considéré a pour fonction, lorsqu'une des tâches qui est en train d'être exécutée par le système considéré (par exemple SYSTEME i) est en train d'attendre l'une des tâches qui est en train d'être exécutée par l'autre (SYSTEME j) des premier et deuxième systèmes, de communiquer avec cet autre système (SYSTEME j) de façon à amener la transmission de semblables indications de relation d'attente enregistrées dans la table du moyen d'enregistrement de l'autre système (SYSTEME j) à son propre système et à amener le moyen de détection d'interblocage de son propre système (SYSTEME i) à employer les indications ainsi transmises depuis cet autre système (SYSTEME j) et l'indication enregistrée dans la table du moyen d'enregistrement de son propre système de façon à permettre que ces moyens de détection d'interblocage déterminent la présence ou l'absence de l'état d'interblocage.

19. Appareil selon la revendication 17 ou 18, où une tâche x qui est en train d'être exécutée dans le système de traitement i est définie par T(i, x) et une tâche y qui est en train d'être exécutée dans un autre système de traitement j est définie par T(j, y) et où, dans la table du moyen d'enregistrement, l'indication de relation d'attente indiquant que la tâche T(i, x) est en train d'attendre la tâche T(j, y) est enregistrée sous la forme T(i, x) → T(j y) et l'indication de relation d'attente indiquant que la tâche T(j, y) est en train d'attendre la tâche T(i, x) est enregistrée sous la forme T(j, y) → T(i, x), et, lorsque ces indications de relation d'attente ont toutes deux été enregistrées dans la table, une boucle T(i, x) → T(j, y) → T(i, x) est détectée, si bien que ledit état d'interblocage est détecté.

20. Procédé de traitement, destiné à être utilise dans un système de traitement dans lequel une pluralité de tâches utilisent un ensemble de ressources communes, comprenant les opérations suivantes:
gérer l'exécution des tâches de façon a permettre l'exécution en parallèle de deux ou plus de deux desdites tâches;
gérer les occupations respectives des ressources par les tâches, et, lorsqu'une première des tâches fait une demande pour une ressource qui est déjà occupée par une deuxième des tâches, produire une indication de relation d'attente qui indique que la première tâche attend la deuxième tâche;
enregistrer l'indication de relation d'attente ainsi produite ; et
détecter, sur la base de semblables indications de relation d'attente enregistrées, un état d'interblocage, ou impasse, dans lequel, relativement à un groupe de tâches constitué d'au moins deux tâches de ladite pluralité, chaque tâche du groupe est en train d'attendre une ressource occupée par une autre des tâches du groupe et n'est pas en mesure d'effectuer la poursuite du traitement;
caractérisé en ce qu'une opération de détection d'interblocage, servant à détecter un tel état d'interblocage, est effectuée indépendamment de la gestion des tâches et de la gestion des occupations, et, dans le cas où une relation d'attente est produite pendant une telle opération, l'enregistrement de cette indication est retenu en attendant l'achèvement de l'opération.

21. Procédé de traitement, destiné à être utilisé dans un appareil de traitement multitâche réparti dans lequel une pluralité de systèmes de traitement sont répartis et dans lequel une pluralité de tâches utilisent un ensemble de ressources communes, comprenant les opérations suivantes:
gérer l'exécution des tâches de façon à permettre l'exécution en parallèle de deux ou plus de deux desdites tâches;
gérer les occupations respectives des ressources par les tâches, et, lorsqu'une première des tâches fait une demande pour une ressource qui est déjà occupée par une deuxième des tâches, produire une indication de relation d'attente qui indique que la première tâche attend la deuxième tâche;
lorsque ladite première tâche est en train d'être effectuée dans un premier des systèmes de traitement et que ladite deuxième tâche est en train d'être effectuée dans un deuxième des systèmes de traitement de l'appareil, communiquer ladite indication de relation d'attente, du premier au deuxième système de traitement;
enregistrer de semblables indications de relation d'attente produites ou bien reçues de La part d'un autre système de traitement de l'appareil ; et
détecter, sur la base de semblables indications de relation d'attente enregistrées, un état d'interblocage, ou impasse, dans lequel, relativement à un groupe de tâches constitué d'au moins deux tâches de ladite pluralité, chaque tâche du groupe est en train d'attendre une ressource occupée par une autre des tâches du groupe et n'est pas en mesure d'effectuer la poursuite du traitement;
caractérisé en ce qu'on détecte, dans ledit premier système de traitement, le moment où une semblable indication de relation d'attente enregistrée persiste pendant une durée prédéterminée, et, lorsqu'une telle indication de relation d'attente persistante a été détectée, appliquer une notification de nouvelle tentative à la tâche dont la demande a provoqué la production de l'indication de relation d'attente persistante, laquelle notification sert à notifier à cette tâche qu'elle doit effectuer de nouveau cette demande, de façon que l'indication de relation d'attente considérée puisse être de nouveau communiquée audit deuxième système de traitement.
